# EUROPÄISCHE PATENTSCHRIFT

(11) **EP 1 054 031 B1**
(45) Veröffentlichungstag und Bekanntmachung des Hinweises auf die Patenterteilung: **24.08.2005**
(21) Anmeldenummer: 00810408.5
(22) Anmeldetag: 12.05.2000
(51) Int. Cl.: C08G 63/91, C08G 64/00, C08G 69/00, C08F 8/00, C08K 5/5317, C08K 5/5333, C08K 5/1539, C08G 63/20

(54) **Molekulargewichtsaufbau und Modifizierung von Polykondensaten**
Increasing the molecular weight and modification of condensation polymers
Augmentation de la masse moléculaire et modification de polymères de condensation

(30) Priorität: 21.05.1999 CH 94799
(43) Veröffentlichungstag der Anmeldung: 22.11.2000
(73) Patentinhaber: Ciba Specialty Chemicals Holding Inc., 4057 Basel (CH)
(72) Erfinder: Simon, Dirk, 67112 Mutterstadt (DE); Pfaendner, Rudolf, 64668 Rimbach (DE); Herbst, Heinz, 79541 Lörrach (DE)

(56) Entgegenhaltungen:
- EP-A- 0 931 810
- EP-B- 0 695 318
- WO-A-97/30105
- WO-A-98/33837
- US-A- 5 693 681
- US-A- 5 756 596

## Beschreibung

Die Erfindung betrifft ein Verfahren zur Molekulargewichtserhöhung und zur Modifizierung von Polykondensaten, die Verwendung eines den Molekulargewichtsaufbau bewirkenden Additivgemisches sowie die nach dem Verfahren erhältlichen Polykondensate und ihre Verwendung insbesondere als Schaumprodukte.

Polykondensate wie zum Beispiel Polyamide, Polycarbonate oder Polyester insbesondere Polyethylenterephthalat (PET) und Polybutylenterephthalat (PBT) sowie Polyestercopolymere und Polyester-Blends z.B. mit Polycarbonat (PBT/PC) sind wichtige thermoplastische Werkstoffe aus der Gruppe der Ingenieur-Kunststoffe. Teilkristalline Polyester werden für Spritzgiessmassen eingesetzt und zeichnen sich durch eine hohe Festigkeit und Steifigkeit, hohe Massbeständigkeit und ein günstiges Verschleissverhalten aus. Amorphe Polyester weisen eine hohe Transparenz, hohe Zähigkeit und sehr gute Beständigkeit gegenüber Spannungsrissbildung auf und werden beispielsweise zu Hohlkörpern verarbeitet. Ein weiterer Anwendungsbereich von PET ist die Herstellung von Fasern und Folien.

Die mechanischen und physikalischen Eigenschaften hängen entscheidend vom Molekulargewicht des Polymeren ab. Polykondensate werden durch Kondensation in der Schmelze hergestellt. Dabei sind mittlere Molekulargewichte zugänglich. Für einige Anwendungen, wie Getränkeflaschen und technische Fasern, bedarf es höherer Molekulargewichte. Diese können durch eine Polykondensation in fester Phase (Festphasenpolykondensation) erhalten werden (S.Fakirov, Kunststoffe, 74 (1984), 218 und R. E. Grützner, A. Koine, Kunststoffe, 82 (1992), 284). Hierbei wird das Präpolymer einer thermischen Behandlung oberhalb der Glastemperatur und unterhalb der Schmelztemperatur des Polymeren im Inertgas oder im Vakuum unterzogen. Diese Methode ist jedoch langwierig und energieintensiv. Für eine Erhöhung der intrinsischen Viskosität ist dabei eine Verweilzeit von bis zu 12 Stunden unter Vakuum oder Inertgas bei Temperaturen von 180 bis 240°C notwendig.

Gemäss US 5 235 027 kann während der Festphasenkondensation auch Pentaerythrit vorteilhaft zugesetzt werden.

Hingegen wird in der WO 98/33837 offenbart, dass sich ein alleiniger Zusatz von Pentaerythrit bei der Reaktivextrusion nachteilig auf die intrinsische Viskosität von PET auswirkt.

Eine weitere Möglichkeit zu höheren Molekulargewichten von Polykondensaten und insbesondere von Polyester zu gelangen, ist durch Zusatz eines Tetracarbonsäureanhydrids und eines sterisch gehinderten Hydroxyphenyl-alkyl-phosphonsäureesters, wie dies in der US 5,693,681 beschrieben ist. Eine raschere Erhöhung des Molekulargewichts bei relativ niedrigen Schmelztemperaturen erscheint jedoch aus technischen und ökonomischen Gründen wünschenswert.

Es wurde nun gefunden, dass durch Zusatz einer Kombination aus polyfunktionellem Anhydrid, polyfunktionellem Alkohol oder Phenol und Phosphonat, und anschließender Reaktivextrusion der Mischung zusammen mit einem Polykondensationspolymeren oder Copolymeren, das Molekulargewicht in kurzen Reaktionszeiten stark erhöht werden kann. Überraschenderweise entstehen durch den Zusatz polyfunktioneller Komponenten keine vemetzten Polykondensate, sondern die polyfunktionellen Verbindungen werden im wesentlichen in die Kette eingebaut und führen zu Kettenverlängerungen und/oder Verzweigungen.

Dies ist insbesondere bei gebrauchten beziehungsweise thermisch oder hydrolytisch geschädigten Polykondensaten, bei welchen die Schädigung typischerweise mit einer Erniedrigung des Molekulargewichtes einhergeht, von besonderem Vorteil. Zum Vergleich sei auf einen typischen Verfahrensweg für die Aufbereitung von PET-Abfällen in DE 4034459 hingewiesen.

Mit Hilfe des erfindungsgemässen Verfahrens kann man insbesondere bei Polykondensat-Recyclaten aus der Sammlung gebrauchter Artikel wie z.B. gebrauchte Verpackungen (Folien und Flaschen) sowie Textilabfälle eine Molekulargewichtserhöhung erreichen. Damit können Recyclate einer hochwertigen Wiederverwendung zugeführt werden, z.B. als Hochleistungsfaser, Spritzgiessteile, in Extrusionsanwendungen oder als Schäume. Solche Recyclate stammen beispielsweise auch aus Wertstoffsammlungen der Industrie oder des Haushalts, aus Produktionsabfällen, wie z.B. aus der Faserherstellung und von Randabschnitten, oder aus Rücknahmeverpflichtungen, wie z.B. Flaschensammlungen von PET-Getränkeflaschen.

Zusätzlich werden die physikalisch-chemischen Eigenschaften durch das gegenständliche Verfahren so verändert, dass sich ansonsten nicht ohne weiteres schäumbare Polykondensate verschäumen lassen.

Geschäumte Polymere haben gegenüber ungeschäumten Polymeren u.a. die Vorteile der Materialeinsparung, besseren Wärmeisolation, niedrigere Dichte kombiniert mit besseren mechanischen Eigenschaften. Polymerschäume werden daher in vielen Anwendungen z.B. Verpackung, Wärmeisolierung. Puffer zur Absorption von mechanischen Kräften eingesetzt. Schäume aus Polykondensationsprodukten finden zunehmendes Interesse aufgrund der interessanten mechanischen Eigenschaften, der Dauer-Gebrauchs-Temperaturbeständigkeit und Formbarkeit, welche jenen von anderen Schäumen überlegen sind.

Im Vergleich zu Polymerisaten sind Polykondensationsprodukte häufig durch niedrige Schmelzviskositäten gekennzeichnet Gleichzeitig findet sich insbesondere bei Polykondensaten mit aromatischen Einheiten eine deutliche Scherverflüssigung bei der Verarbeitung der Polymerschmelze, Diese deutliche Abhängigkeit der Schmelzviskosität von der Scherrate geht einher mit geringen Schmelzefestigkeiten und -dehnbarkeiten. Eine ausreichend hohe Schmelzefestigkeit und -dehnbarkeit sind aber wichtige Voraussetzungen für die Schäumbarkeit von Polymeren. Im allgemeinen können daher aus Polykondensaten erst nach einer geeigneten Strukturmodifizierung Schäume hergestellt werden.

Es ist bekannt, daß nach Polykondensation mit Monomeren, die zu amorphen Polykondensationsprodukten führen, die Schäumbarkeit verbessert wird, wie dies beispielsweise in der EP 560151 beschrieben ist. Dies liegt darin begründet, daß die Scherverflüssigung in der Polymerschmelze bis zu einem gewissen Grad verringert wird Aufgrund aliphatischer Bestandteile welsen diese Schäume eine geringe hydrolytische Beständigkeit auf, zumeist sind diese Schäume bioabbaubar, für Anwendungen im Außenbereich also nicht geeignet. Im übrigen ist ihre Wärmeformbeständigkeit geringer. Außerdem sind diese Monomere verhältnismäßig teuer. Amorphe Polykondensate sind somit nicht unbedingt erwünscht.

Ein Gegenstand der Erfindung ist ein Verfahren zur Erhöhung des Molekulargewichtes und/oder zur Modifizierung von Polykondensationsprodukten in der Schmelze, wobei das Polykondensationsprodukt ein aliphatischer oder aromatischer Polyester, ein aliphatisches oder aromatisches Polyamid oder Polycarbonat oder ein Gemisch (blend) oder Copolymeres davon ist, dadurch gekennzeichnet, daß man dem Polykondensationsprodukt ein Gemisch enthaltend
a) mindestens ein polyfunktionelles Anhydrid (Polyanhydrid):
b) mindestens eine polyfunktionelle Verbindung, deren funktionelle Gruppen mit den Anhydridgruppen der Komponente a) reagieren können, wobei die polyfunktionelle Verbindung eine polyfunktionelle Hydroxylverbindung (Polyol) ist, und
c) mindestens ein Phosphonat
zusetzt.

Neben Polyester, Polyamid oder Polycarbonat werden von der vorliegenden Erfindung auch die entsprechenden Copolymeren und Blends, wie z.B. PBT/PS, PBT/ASA, PBT/ABS, PBT/PC, PET/ABS, PETIPC, PBT/PET/PC, PBT/PET, PA/PP, PA/PE und PA/ABS, umfasst. Es muss dabei jedoch berücksichtigt werden, dass das erfindungsgemässe Verfahren, wie alle Methoden, die Austauschreaktionen zwischen den Blendkomponenten zulassen, zu einer Beeinflussung bei Blends, d.h. zur Bildung von copolymeren Strukturen führen kann.

Besonders bevorzugt ist das Polykondensationsprodukt Polyethylenterephthalat (PET), Polybutylentherephthalat (PBT), Polyethylennaphthalat (PEN), Polytrimethylenterephthalat (PTT), ein Copolyester, PA 6, PA 6.6, Polycarbonat enthaltend Ober Carbonatgruppen verknüpftes Bisphenol A, Bisphenol Z oder Bisphenol F.

Ganz besonders bevorzugt handelt es sich bei dem Polykondensat um PET oder ein Copolymeres mit PET.

Bevorzugt handelt es sich bei dem Polykondensat um ein Recyclat.

Unter Polyamiden, d.h. sowohl Neu-Polyamiden wie Polyamid-Recyclaten, sind aliphatische und aromatische Polyamide oder Copolyamide, die sich von Diaminen und Dicarbonsäuren und/oder von Aminocarbonsäuren oder den entsprechenden Lactamen ableiten, zu verstehen. Geeignete Polyamide sind beispielsweise: PA 6, PA 11, PA 12, PA 46, PA 66, PA 69, PA 610, PA 612, PA 10.12, PA 12.12 sowie auch amorphe Polyamide und thermoplastische Polyamid-Elastomere wie z.B. Polyetheramide vom Typ Vestamid, Grilamid ELY60, Pebax, Nyim und Grilon ELX.. Polyamide der genannten Art sind allgemein bekannt und im Handel erhältlich.

Vorzugsweise werden als Polyamide kristalline oder teil-kristalline Polyamide und insbesondere PA6 und PA6.6 oder ihre Mischungen, sowie Recyclate auf dieser Basis, oder Copolymere davon, eingesetzt.

Bei dem Polyester, d.h. sowohl Neu-Polyester wie Polyesterrecyclat, kann es sich um Homo- oder Mischpolyester handeln, die aus aliphatischen, cycloaliphatischen oder aromatischen Dicarbonsäuren und Diolen oder Hydroxycarbonsäuren aufgebaut sind.

Die Polyester können sowohl durch Direktveresterung (PTA-Prozess) als auch durch Umesterung (DMT-Prozess) hergestellt werden. Bei der Herstellung können beliebige bekannte Katalysatorsysteme eingesetzt werden.

Die aliphatischen Dicarbonsäuren können 2 bis 40 C-Atome, die cycloaliphatischen Dicarbonsäuren 6 bis 10 C-Atome, die aromatischen Dicarbonsäuren 8 bis 14 C-Atome, die aliphatischen Hydroxycarbonsäuren 2 bis 12 C-Atome und die aromatischen wie cycloaliphatischen Hydroxycarbonsäuren 7 bis 14 C-Atome enthalten.

Die aliphatischen Diole können 2 bis 12 C-Atome, die cycloaliphatischen Diole 5 bis 8 C-Atome und die aromatischen Diole 6 bis 16 C-Atome enthalten.

Es kann sich auch um Polyoxyalkylenglykole mit Molekulargewichten zwischen 150 und 40000 handeln.

Als aromatische Diole werden jene bezeichnet, bei denen zwei Hydroxygruppen an einen oder verschiedene aromatische Kohlenwasserstoffreste gebunden sind.

Femer ist es möglich, dass die Polyester mit geringen Mengen, z.B. 0,1 bis 3 Mol%, bezogen auf die vorhandenen Dicarbonsäuren, durch mehr als difunktionelle Monomeren (z.B. Pentaerythrit. Trimellitsäure, 1,3,5-Tri(hydroxyphenyl)benzol, 2,4-Dihydroxybenzoesäure oder 2-(4-Hydroxyphenyl)-2-(2,4-dihydroxyphenyl)propan) verzweigt sind.

Geeignete Dicarbonsäuren sind lineare und verzweigte gesättigte aliphatische Dicarbonsäuren, aromatische Dicarbonsäuren und cycloaliphatische Dicarbonsäuren.
Als aliphatische Dicarbonsäuren kommen jene mit 2 bis 40 C-Atome in Frage, z.B. Oxalsäure, Malonsäure. Dimethylmalonsäure, Bernsteinsäure, Pimelinsäure, Adipinsäure, Trimethyladipinsäure. Sebacinsäure, Azelainsäure und Dimersäuren (Dimerisationsprodukte von ungesättigten aliphatischen Carbonsäuren wie Oelsäure), alkylierte Malon- und Bernsteinsäuren wie Octadecylbernsteinsäure.

Als cycloaliphatische Dicarbonsäuren kommen in Frage: 1,3-Cyclobutandicarbonsäure, 1,3-Cyclopentandicarbonsäure, 1,3- und 1,4-Cyclohexandicarbonsäure, 1,3- und 1,4-(Dicarboxylmethyl)-cyclohexan, 4,4'-Dicyclohexyldicarbonsäure.

Als geeignete aromatische Dicarbonsäuren kommen in Frage: Insbesondere Terephthalsäure, Isophthalsäure, o-Phthalsäure, sowie 1,3-, 1,4-, 2,6- oder 2,7-Naphthalindicarbonsäure, 4,4'-Diphenyldicarbonsäure, 4,4'-Diphenylsulfondicarbonsäure, 4,4'-Benzophenondicarbonsäure, 1,1,3-Trimethyl-5-carboxyl-3-(p-carboxylphenyl)-indan, 4,4'-Diphenyletherdicarbonsäure, Bis-p-(carboxylphenyl)-methan oder Bis-p-(carboxylphenyl)-ethan.

Bevorzugt sind die aromatischen Dicarbonsäuren, unter ihnen besonders Terephthalsäure, Isophthalsäure und 2,6-Naphthalindicarbonsäure.

Weitere geeignete Dicarbonsäuren sind jene, die -CO-NH-Gruppen enthalten; sie sind in der DE-A2414349 beschrieben. Auch Dicarbonsäuren, die N-heterocyclische Ringe enthalten, sind geeignet, z.B. solche, die sich von carboxylalkylierten, carboxylphenylierten oder carboxybenzylierten Monoamin-s-triazindicarbonsäuren (vgl. DE-A2121184 und 2533675), Mono- oder Bishydantoinen, gegebenenfalls halogenierten Benzimidazolen oder Parabansäure ableiten. Die Carboxyalkylgruppen kann hierbei 3 bis 20 C-Atome enthalten.

Geeignete aliphatische Diole sind die linearen und verzweigten aliphatischen Glykole, besonders die mit 2 bis 12, insbesondere 2 bis 6 Kohlenstoffatomen im Molekül, z.B.: Ethylenglykol, 1,2- und 9,3-Propylenglykol, 1,2-, 1,3-, 2,3- oder 1,4-Butandiol, Pentylglykol, Neopentylglykol, 1,6-Hexandiol, 1,12-Dodecandiol. Ein geeignetes cycloaliphatisches Diol ist z.B. 1,4-Dihydroxycyclohexan. Weitere geeignete aliphatische Diole sind z.B. 1,4-Bis-(hydroxymethyl)cyclohexan, aromatisch-aliphatische Diole wie p-Xylylenglykol oder 2,5-Dichlor-p-xylylenglykol, 2,2-(β-Hydroxyethoxyphenyl)-propan sowie Polyoxyalkylenglykole wie Diethylenglykol, Triethylenglykol, Polyethylenglykol oder Polypropylenglykol. Die Alkylendiole sind bevorzugt linear und enthalten insbesondere 2 bis 4Kohlenstoffatome.

Bevorzugte Diole sind die Alkylendiole, 1,4-Dihydroxycyclohexan und 1,4-Bis(hydroxymethyl)cyclohexan. Insbesondere bevorzugt sind Ethylenglykol, 1,4-Butandiol, sowie 1,2-und 1,3-Propylenglykol.

Weitere geeignete aliphatische Diole sind die β-hydroxyalkylierten, besonders β-hydroxyethylierten Bisphenole wie 2,2-Bis[4'-(β-hydroxyethoxy)-phenyl]-propan. Weitere Bisphenole sind später genannt.

Eine weitere Gruppe von geeigneten aliphatischen Diolen sind die in den deutschen Offenlegungsschriften 1812003, 2342432, 2342372 und 2453326 beschriebenen heterocyclischen Diole. Beispiele sind: N,N'-Bis-(β-hydroxyethyl)-5,5-dimethyl-hydantoin, N,N'-Bis-(β-hydroxypropyl)-5,5-dimethyl-hydantoin, Methylen-bis-[N-(β-hydroxyethyl)-5-methyl-5-ethylhydantoin], Methylen-bis-[N-(β-hydroxyethyl)-5,5-dimethylhydantoin], N,N'-Bis-(β-hydroxyethyl)-benzimidazolon, N,N'-Bis-(β-hydroxyethyl)-(tetrachlor)-benzimidazolon oder N,N'-Bis-(β-hydroxyethyl)-(tetrabrom)-benzimidazolon.

Als aromatische Diole kommen einkernige Diphenole in Betracht und besonders zweikernige, die an jedem aromatischen Kern eine Hydroxylgruppe tragen. Unter aromatisch werden bevorzugt kohlenwasserstoffaromatische Reste wie z.B. Phenylen oder Naphthylen verstanden. Neben z.B. Hydrochinon, Resorcin oder 1,5-, 2,6- und 2,7-Dihydroxynaphthalin sind besonders die Bisphenole zu nennen, die durch die folgenden Formeln dargestellt werden können:

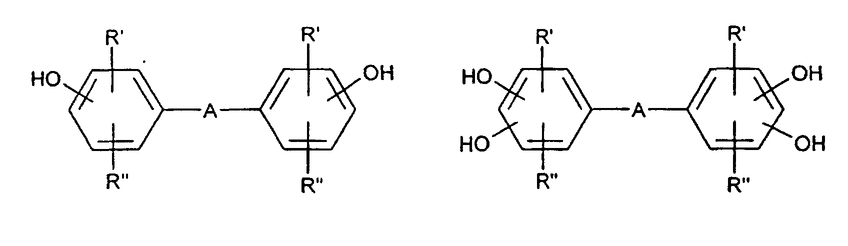

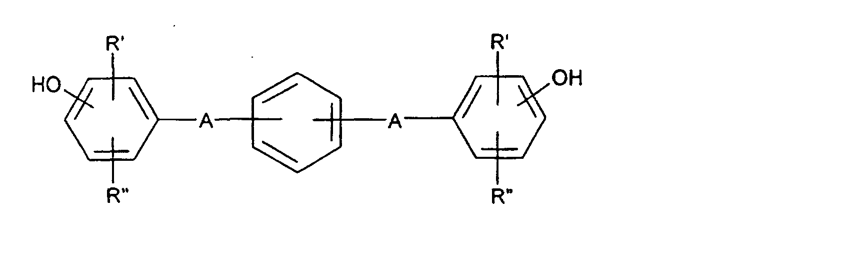

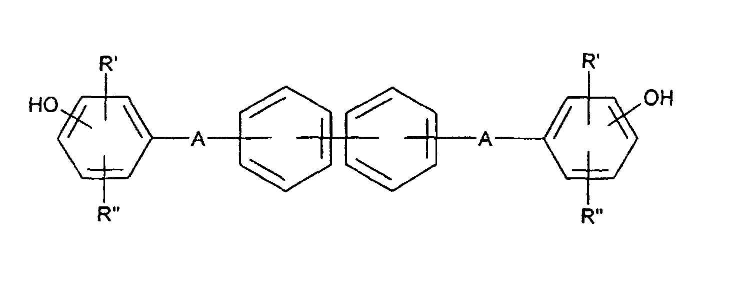

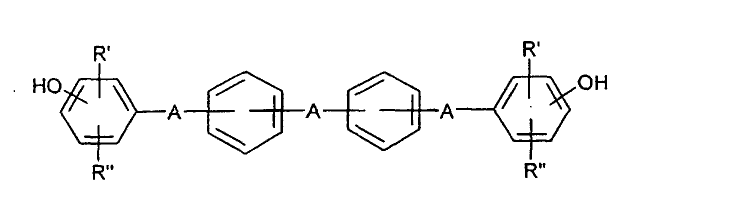

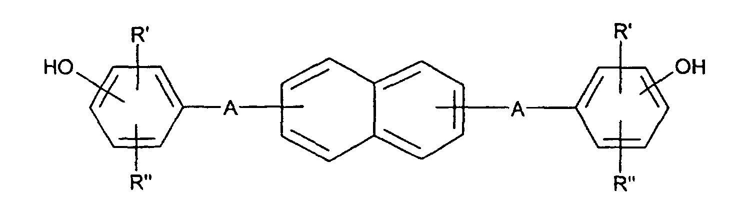

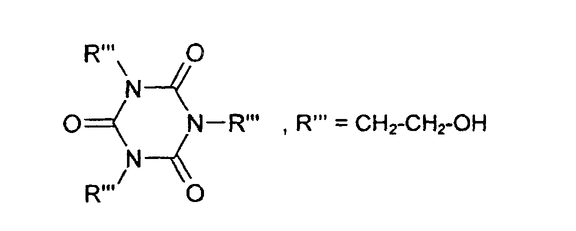

Die Hydroxylgruppen können sich in m-Stellung, besonders aber in p-Stellung befinden, R' und R" können in diesen Formeln Alkyl mit 1 bis 6 C-Atomen, Halogen wie Chlor oder Brom und insbesondere Wasserstoffatome bedeuten. A kann für eine direkte Bindung stehen, oder -O-, -S-, -(O)S(O)-, -C(O)-, -P(O)(C₁-C₂₀-Alkyl)-, gegebenenfalls substituiertes Alkyliden, Cycloalkyliden oder Alkylen bedeuten.

Beispiele für gegebenenfalls substituiertes Alkyliden sind: Ethyliden, 1,1- oder 2,2-Propyliden, 2,2-Butyliden, 1,1-Isobutyliden, Pentyliden, Hexyliden, Heptyliden, Octyliden, Dichlorethyliden, Trichlorethyliden.

Beispiele für gegebenenfalls substituiertes Alkylen sind Methylen, Ethylen, Phenylmethylen, Diphenylmethylen, Methylphenylmethylen. Beispiele für Cycloalkyliden sind Cyclopentyliden, Cyclohexyliden, Cycloheptyliden und Cyclooctyliden.

Beispiele für Bisphenole sind: Bis(p-hydroxyphenyl)-ether oder -thioether, Bis(p-hydroxyphenyl)-sulfon, Bis(p-hydroxyphenyl)-methan, Bis(4-hydroxyphenyl)-2,2'-biphenyl, Phenylhydrochinon, 1,2-Bis(p-hydroxyphenyl)-ethan, 1-Phenyl-bis(p-hydroxyphenyl)-methan, Diphenyl-bis(p-hydroxyphenyl)-methan, Diphenyl-bis(p-hydroxyphenyl)-ethan, Bis(3,5-dimethyl-4-hydroxyphenyl)-sulfon, Bis(3,5-dimethyl-4-hydroxyphenyl)-p-diisopropylbenzol, Bis(3,5-dimethyl-4-hydroxyphenyl)-m-diisopropylbenzol 2,2-Bis(3',5'-dimethyl-4'-hydroxyphenyl)-propan, 1,1- oder 2,2-Bis(p-hydroxyphenyl)-butan, 2,2-Bis(p-hydroxyphenyl)-hexafluorpropan, 1,1-Dichlor- oder 1,1,1-Trichlor-2,2-bis(p-hydroxyphenyl)-ethan, 1,1-Bis(p-hydroxyphenyl)-cyclopentan und besonders 2,2-Bis(p-hydroxyphenyl)-propan (Bisphenol-A) und 1,1-Bis(p-hydroxyphenyl)-cyclohexan (Bisphenol-C).

Geeignete Polyester von Hydroxycarbonsäuren sind z.B. Polycaprolacton, Polypivalolacton oder die Polyester von 4-Hydroxycyclohexancarbonsäure, 2-Hydroxy-6-naphthalincarbonsäure oder 4-Hydroxybenzoesäure.

Weiterhin sind auch Polymere, die überwiegend Esterbindungen, aber auch andere Bindungen enthalten können, geeignet, wie z.B. Polyesteramide oder Polyesterimide.

Polyester mit aromatischen Dicarbonsäuren haben die grösste Bedeutung erlangt, insbesondere die Polyalkylenterephthalate. Bevorzugt sind daher erfindungsgemässe Formmassen, in denen der Polyester aus mindestens 30 Mol%, bevorzugt mindestens 40 Mol%, aromatische Dicarbonsäuren und zu mindestens 30 Mol%, vorzugsweise mindestens 40 Mol%, aus Alkylendiolen mit bevorzugt 2 bis 12C-Atomen aufgebaut ist, bezogen auf den Polyester.

Insbesondere ist in diesem Fall das Alkylendiol linear und enthält 2 bis 6C-Atome, wie z.B. Ethylen-, Tri-, Tetra- oder Hexamethylenglykol und die aromatische Dicarbonsäure, Terephthal- und/oder Isophthalsäure.

Besonders geeignete Polyester sind PET, PBT, PEN, PTT und entsprechende Copolymere, wobei PET und seine Copolymeren speziell bevorzugt sind. Besondere Bedeutung erlangt das Verfahren ausserdem bei PET-Recyclaten, die beispielsweise aus Flaschensammlungen wie z.B. aus Sammlungen der Getränkeindustrie gewonnen werden. Diese Materialien bestehen vorzugsweise aus Terephthalsäure, 2,6-Naphthalindicarbonsäure und/oder Isophthalsäure in Kombination mit Ethylenglykol und/oder 1,4-Bis(hydroxymethyl)cyclohexan.

Als Polyester-Blends sind besonders solche mit Polycarbonat zu nennen.

Unter Polycarbonat (PC) ist sowohl Neu-Polycarbonat wie auch Polycarbonat-Recyclat zu verstehen. PC wird beispielsweise aus Bisphenol A und Phosgen bzw. einem Phosgen-Analogen wie Trichloromethylchloroformat, Triphosgen oder Diphenylcarbonat durch Kondensation im letzten Falle in der Regel unter Zugabe eines geeigneten Umesterungskatalysators wie z.B. eines Borhydrids, eines Amins wie 2-Methylimidazol oder eines quaternären Ammoniumsalzes erhalten; neben Bisphenol A können zusätzlich auch noch andere Bisphenol-Komponenten verwendet werden, auch können im Benzolkem halogenierte Monomere eingesetzt werden. Als besonders geeignete Bisphenol-Komponenten sind zu erwähnen: 2,2-Bis(4'-hydroxyphenyl)-propan (Bisphenol A), 2,4'-Dihydroxydiphenylmethan, Bis(2-hydroxyphenyl)-methan, Bis(4-hydroxyphenyl)-methan, Bis(4-hydroxy-5-propylphenyl)-methan, 1,1-Bis(4'-hydroxyphenyl)-ethan, Bis(4-hydroxyphenyl)-cyclohexylmethan, 2,2-Bis(4'-hydroxyphenyl)-1-phenylpropan, 2,2-Bis(3',5'-dimethyl-4'-hydroxyphenyl)-propan, 2,2-Bis(3',5'-dibromo-4'-hydroxyphenyl)-propan, 2,2-Bis(3',5'-dichloro-4'-hydroxyphenyl)-propan, 1,1-Bis(4'-hydroxyphenyl)-cyclododecan, 1,1-Bis(3',5'-dimethyl-4'-hydroxyphenyl)-cyclododecan, 1,1-Bis(4'-hydroxyphenyl)-3,3,5-trimethylcyclohexan, 1,1-Bis(4'-hydroxyphenyl)-3,3,5,5-tetramethylcyclohexan, 1,1-Bis(4'-hydroxyphenyl)-3,3,5-trimethylcyclopentan sowie die weiter oben angegebenen Bisphenole. Weiterhin können die Polycarbonate auch durch geeignete Mengen von mehr als difunktionellen Monomeren verzweigt vorliegen (Beispiele wie weiter oben für die Polyester angegeben).

Die im erfindungsgemässen Verfahren verwendbaren Polyester-Copolymere oder Blends werden in üblicher Art und Weise aus den Ausgangspolymeren hergestellt. Bevorzugt sind als Polyester-Komponente PET, PBT und als PC-Komponente ein PC auf Bisphenol-A-Basis. Das Verhältnis Polyester zu PC ist bevorzugt 95:5 bis 5:95, wobei ein Verhältnis, bei dem eine Komponente mindestens 75% ausmacht, besonders bevorzugt ist.

Besondere Bedeutung erlangt die Erfindung bei Polyester-Recyclaten, wie sie bei Produktionsabfällen, Wertstoffsammlungen oder durch sogenannte Rücknahmeverpflichtungen z.B. bei der Automobilindustrie oder im Elektrobereich gewonnen werden. Die Polykondensat-Recyclate sind dabei in vielfältiger Weise thermisch und/oder hydrolytisch geschädigt. Ausserdem können diese Recyclate auch in untergeordneten Mengen Beimischungen von Kunststoffen anderer Struktur wie beispielsweise Polyolefine, Polyurethane, ABS oder PVC enthalten. Ausserdem können diese Recyclate auch Beimischungen durch übliche Verunreinigungen wie z.B. Reste von Farbstoffen, Klebstoffen, Kontaktmedien oder Lacken, Metallspuren, Wasserspuren, Spuren von Betriebsmitteln oder anorganische Salze aufweisen.

Bei dem eingesetzten Polyanhydrid a) handelt es sich um ein Polyanhydrid, welches 2-8 Anhydridfunktionen aufweist, wobei neben den Anhydridfunktionen noch freie Carbonsäuregruppen oder Carbonsäureester vorhanden sein können.

Bevorzugt werden Tetracarbonsäuredianhydride eingesetzt.

Im Rahmen der Erfindung verwendbare Tetracarbonsäuredianhydride sind solche der Formel 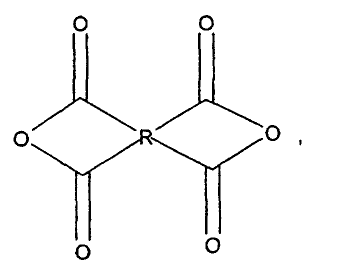 worin R C₄-C₂₀-Alkantetrayl oder einen Rest der Formeln(Xa)-(Xj) darstellt 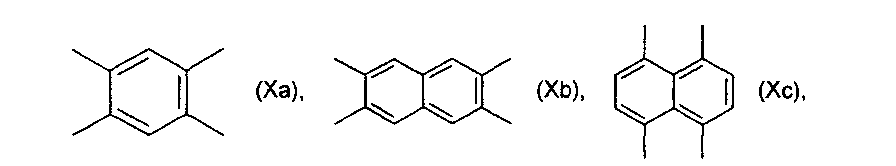 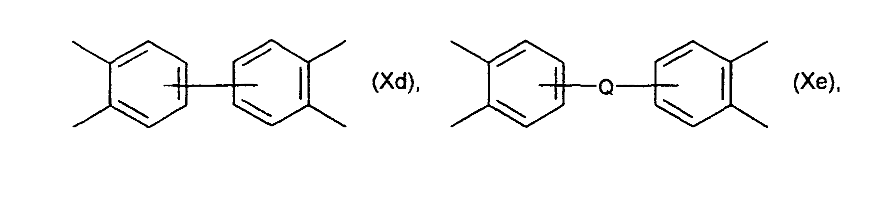 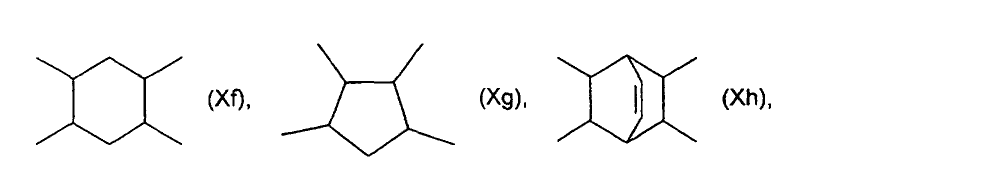 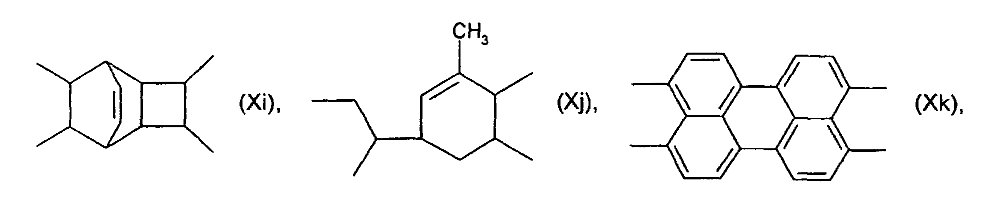 worin Q für -CH₂-, -CH(CH₃)-, -C(CH₃)₂-, -C(CF₃)₂-, -S-, -O-, -SO₂-, -NHCO-, -CO- oder >P(O)(C₁-C₂₀-Alkyl) steht und worin die aromatischen Ringe in den Formeln und (Va)-(Ve) unsubstituiert oder durch eine oder mehrere C₁-C₆-Alkylgruppen, C₁-C₆-Alkoxygruppen oder Halogenatome substituiert sind.

Bedeutet R einen Alkantetraylrest, so kann das Tetracarbonsäuredianhydrid beispielsweise Butan-1,2,3,4-tetra-carbonsäuredianhydrid sein.

Bevorzugt sind Tetracarbonsäuredianhydride, welche aromatische Ringe enthalten.

Besonders bevorzugt sind Pyromellitsäuredianhydrid, 3,3',4,4'-Benzophenontetracarbonsäuredianhydrid. 3,3',4,4'-Biphenyltetracarbonsäuredianhydrid und Oxy-diphthalsäuredianhydrid.

Gegebenenfalls kann auch ein Gemisch von Tetracarbonsäuredianhydriden unterschiedlicher Struktur eingesetzt werden.

Einzelne besonders bevorzugte Tetracarbonsäuredianhydride sind: Pyromellitsäuredianhydrid, Benzophenontetracarbonsäuredianhydrid, 1,1,2,2-Ethantetracarbonsäuredianhydrid, 1,2,3,4-Cyclopentantetracarbonsäuredianhydrid, Diphenylsulfon-tetracarbonsäuredianhydrid, 5-(2,5-Dioxotetrahydro-3-furanyl)-3-methyl-3 cyclohexan-1,2-dicarbonsäuredianhydrid, Bis-(3,4-dicarbonsäurephenyl)-ether-dianhydrid, Bis-(3,4-Dicarbonsäurephenyl)-thioether-dianhydrid, Bisphenol-A-bisether-dianhydrid, 2,2-Bis-(3,4-Dicarbonsäurephenyl)-hexafluorpropan-dianhydrid. 2,3,6,7-Naphthalin-tetracarbonsäure-dianhydrid, Bis-(3,4-dicarbonsäurephenyl)-sulfon-dianhydrid, 1,2,5,6-Naphthalin-tetracarbonsäure-dianhydrid, 2,2',3,3'-Biphenyltetracarbonsäure-dianhydrid, Hydrochinonbisether-dianhydrid, 3,4,9,10-Perylentetracarbonsäure-dianhydrid, 1,2,3,4-Cyclobutantetracarbonsäure-dianhydrid, 3,4-Dicarboxy-1,2,3,4-tetrahydro-1-naphthalin-bemsteinsäure-dianhydrid, Bicyclo(2,2)oct-7-en-2,3,5,6-tetracarbonsäure-dianhydrid, Tetrahydrofuran-2,3,4,5-tetracarbonsäure-dianhydrid, 2,2-bis(3,4-Dicarboxyphenyl)propan-dianhydrid, 3,3',4,4'-Biphenyltetracarbonsäure-dianhydrid, 4,4'-Oxydiphthalsäure-dianhydrid (ODPA), Ethylendiamin-tetracarbonsäure-dianhydrid (DDTAh), oder Kombinationen dieser Dianhydride.

Bevorzugt setzt man ein Polyol aus Phenolen und/oder Alkoholen mit 3-10 freien Hydroxylgrupen.

Polyfunktionelle Verbindungen aus der Klasse der Alkohole im Sinne dieser Erfindung sind bekannt und bedeuten beispielsweise Pentaerythrit, Dipentaerythrit, Tripentaerythrit. Bistrimethylolpropan, Bistrimethylolethan, Trismethylolpropan, Sorbit, Maltit, Isomaltit, Lactit, Lycasin, Mannit, Lactose, Leucrose, Tris(hydroxyethyl)isocyanurat, Palatinit, Tetramethylolcyclohexanol, Tetramethylolcyclopentanol, Tetramethylolcyclopyranol, Glycerin, Diglycerin, Polyglycerin oder 1-0-α-D-Glycopyranosyl-D-mannit-dihydrat, 1,1,1-Tris(4-hydroxyphenyl)ethane, 4,6-Dimethyl-2,4,6-tris(4-hydroxyphenyl)heptane, 2,2-Bis(4-(4-hydroxyphenyl)-cyclohexyl)propan, 1,3,5Trihydroxybenzol, 1,2,3-Trihydroxybenzol, 1,4-Bis(4-hydroxyphenyl)phenyl)-benzol, 2,3,4-Trihydroxyacetophenon, 2,3,4-Trihydroxybenzoesäure, 2,3,4-Trihydroxybenzophenon, 2,4,4'-Trihydroxybenzophenon, 2',4',6'-Trihydroxy-3-(4-hydroxyphenyl)propiophenon, Pentahydroxyflavon, 3,4,5-Trihydroxypyrimidin, 3,4,5-Trihydroxyphenylmethylamin, Tetrahydroxy-1,4-chinonhydrat, 2,2',4,4'Tetrahydroxybenzophenon oder 1,2,5,8-Tetrahydroxyanthrachinon. Bevorzugt sind Pentaerythrit, Dipentaerythrit und Tris(hydroxyethyl)isocyanurat.

Bevorzugt setzt man als Polyol Glycerin oder Pentaerythrit ein.

Bevorzugt sind Phosphonate der Formel I 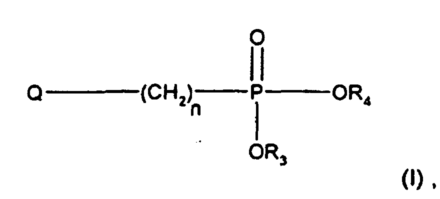 worin
R₃ H, C₁-C₂₀-Alkyl, unsubstituiertes oder durch C₁-C₄-Alkyl substituiertes Phenyl oder Naphthyl bedeutet,
R₄ Wasserstoff, C₁-C₂₀-Alkyl, unsubstituiertes oder durch C₁-C₄-Alkyl substituiertes Phenyl oder Naphthyl; oder M^{r+} / r darstellt,
M^{r+} ein r-wertiges Metallkation oder das Ammoniumion ist,
n 0, 1, 2, 3, 4, 5 oder 6 bedeutet, und
r 1, 2, 3 oder 4 darstellt;
Q Wasserstoff, -X-C(O)-OR₇, oder einen Rest 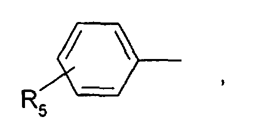 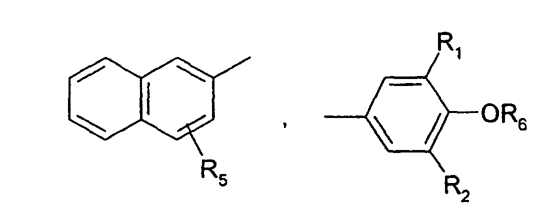 bedeutet,
R₁ iso-Propyl, tert-Butyl, Cyclohexyl oder mit 1-3 C₁-C₄-Alkylgruppen substituiertes Cyclohexyl bedeutet,
R₂ Wasserstoff, C₁-C₄-Alkyl, Cyclohexyl oder mit 1-3 C₁-C₄-Alkylgruppen substituiertes Cyclohexyl darstellt,
R₅, H, C₁-C₁₈-Alkyl, OH, Halogen oder C₃-C₇-Cycloalkyl ist;
R₆ H, Methyl, Trimethylsilyl, Benzyl, Phenyl, Sulfonyl oder C₁-C₁₈-Alkyl ist;
R₇ H, C₁-C₁₀-Alkyl oder C₃-C₇-Cycloalkyl ist;und
X Phenylen, mit C₁-C₄-Alkylgruppen substituiertes Phenylen oder Cyclohexylen bedeutet.

Weitere geeignete Phosphonate sind nachstehend aufgeführt.

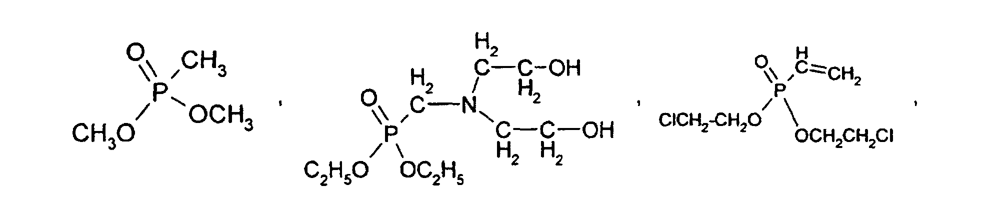

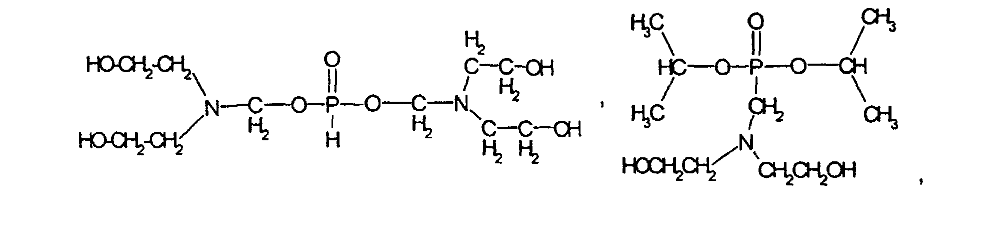

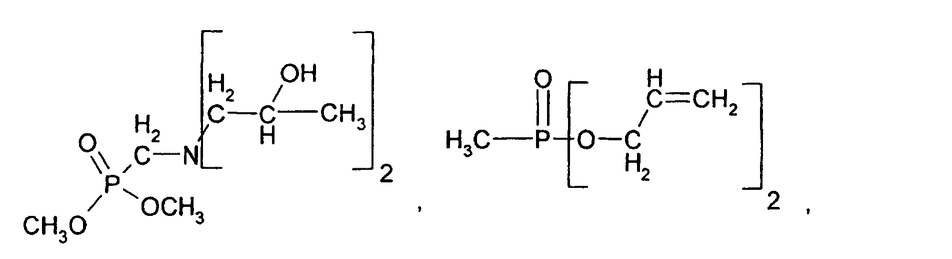

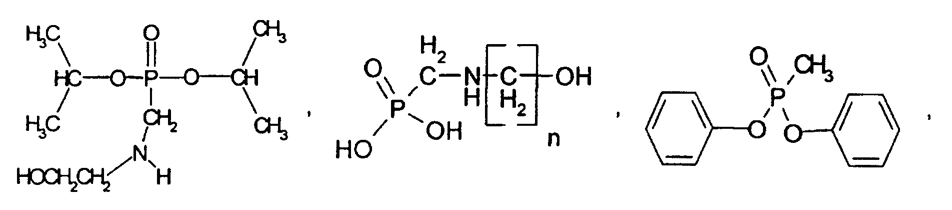

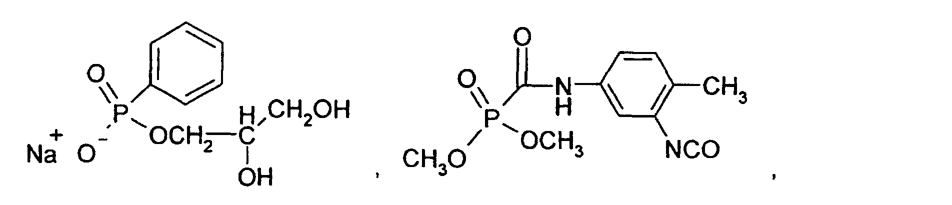

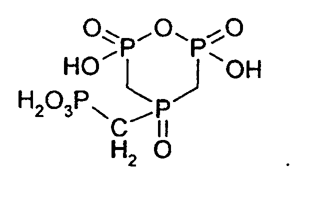

Bevorzugt sind sterisch gehinderte Hydroxyphenyl-alkyl-phosphonsäureester bzw. -halbester wie sie beispielsweise aus US-A-4778840 bekannt sind.

Besonders bevorzugt sind Verbindungen der Formel Ia 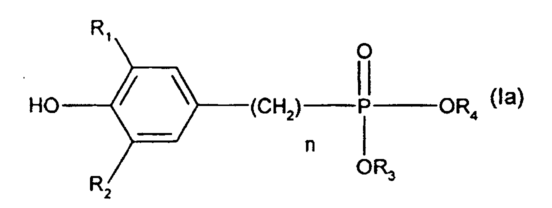 worin
R₁ H, iso-Propyl, tert-Butyl, Cyclohexyl oder mit 1-3 C₁-C₄-Alkylgruppen substituiertes Cyclohexyl bedeutet,
R₂ Wasserstoff, C₁-C₄-Alkyl, Cyclohexyl oder mit 1-3 C₁-C₄-Alkylgruppen substituiertes Cyclohexyl,
R₃ C₁-C₂₀-Alkyl, unsubstituiertes oder durch C₁-C₄-Alkyl substituiertes Phenyl oder Naphthyl bedeutet,
R₄ Wasserstoff, C₁-C₂₀-Alkyl, unsubstituiertes oder durch C₁-C₄-Alkyl substituiertes Phenyl oder Naphthyl; oder M^{r+} / r darstellt,
M^{r+} ein r-wertiges Metallkation ist,
n 1, 2, 3, 4, 5 oder 6 bedeutet, und
r 1, 2, 3 oder 4 darstellt.

Halogen bedeutet Fluor, Chlor, Brom oder lod.

Bedeuten Substituenten Alkyl mit bis zu 18 Kohlenstoffatomen, so kommen hierfür die Reste wie Methyl, Ethyl, Propyl, Butyl, Pentyl, Hexyl und Octyl, Stearyl sowie entsprechende verzweigte Isomere in Frage, bevorzugt sind C₂-C₄-Alkyl und iso-Octyl.

Durch C₁-C₄-Alkyl substituiertes Phenyl oder Naphthyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-butylphenyl, 2-Ethylphenyl, 2,6-Diethylphenyl, 1-Methylnaphthyl, 2-Methylnaphthyl, 4-Methylnaphthyl, 1,6-Dimethylnaphthyl oder 4-tert-Butylnaphthyl.

Durch C₁-C₄-Alkyl substituiertes Cyclohexyl, das vorzugsweise 1 bis 3, insbesondere 1 oder 2 verzweigte oder unverzweigte Alkylgruppen-Reste enthält, bedeutet beispielsweise Cyclopentyl, Methylcyclopentyl, Dimethylcyclopentyl, Cyclohexyl, Methylcyclohexyl, Dimethylcyclohexyl, Trimethylcyclohexyl oder tert-Butylcyclohexyl.

Ein ein-, zwei-, drei- oder vier-wertiges Metallkation ist vorzugsweise ein Alkalimetall-, Erdalkalimetall-, Schwermetall- oder Aluminium-Kation, beispielsweise Na⁺, K⁺, Mg⁺⁺, Ca⁺⁺, Ba⁺⁺, Zn⁺⁺, Al⁺⁺⁺, oder Ti⁺⁺⁺⁺. Speziell bevorzugt ist Ca⁺⁺.
Bevorzugte Verbindungen der Formel I sind diejenigen, welche mindestens eine tert-Butylgruppe als Rest R₁ oder R₂ aufweisen. Ganz besonders bevorzugt sind Verbindungen worin R₁ und R₂ gleichzeitig tert-Butyl bedeutet.

Bevorzugt bedeutet n 1 oder 2 und ganz besonders bevorzugt 1.

Ganz besonders bevorzugte sterisch gehinderte Aryl-alkyl-phosphonsäureester bzw. - halbester sind die Verbindungen der Formel II, III, IV, V und VI 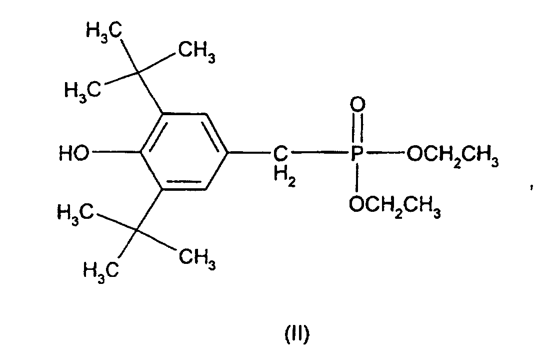 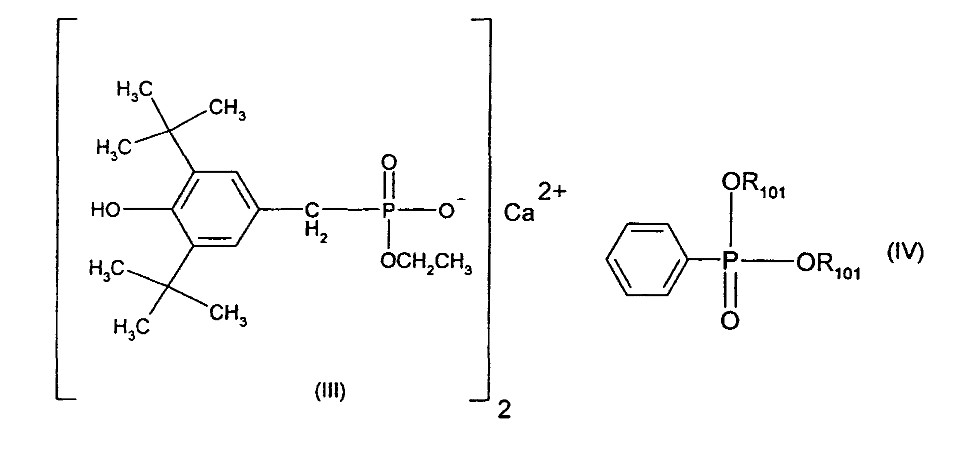 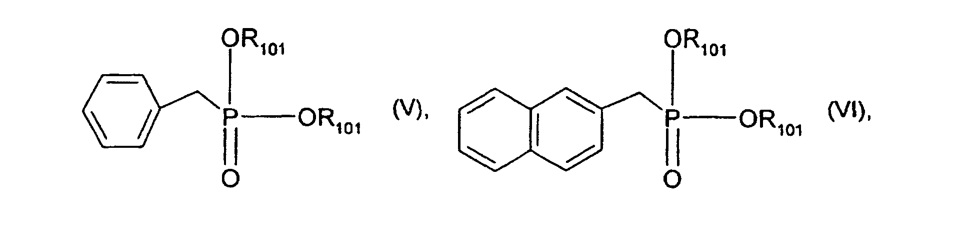 worin die R₁₀₁ unabhängig voneinander Wasserstoff, Ethyl, Phenyl oder M^{r+} / r bedeuten. Bedeutungen für M^{r+} / r sind bereits vorstehend angegeben.

Die Verbindungen II, III, IV, V und VI sind teilweise im Handel erhältlich oder nach Standardverfahren herstellbar.

Die Durchführung des Verfahrens kann in jeglichen beheizbaren und mit einer Rührvorrichtung ausgestatteten Gefässen erfolgen. Vorzugsweise wird in geschlossenen Apparaten unter Ausschluss von Luftsauerstoff, z.B. unter einer Inertgasatmosphere (N₂) oder unter Vakuum, in einem Kneter, Mischer oder Rührkessel erhitzt. Es ist aber ebenso möglich, das Verfahren in einem Extruder und auch in Anwesenheit von Luft durchzuführen.

Das zu erhitzende Polykondensat und die Mischung von Dianhydrid, polyfunktioneller Verbindung b) und Phosphonsäureester bzw. -halbester werden üblicherweise am Anfang der Erhitzung in den Apparat eingefüllt, eine nachträgliche Dosierung der Mischung zu dem Polykondensat ist jedoch auch möglich, wobei die Mischung als solches aber auch die Einzelkomponenten in beliebiger Reihenfolge zugegeben werden können. Die Komponenten können für die Zugabe unabhängig voneinander als Flüssigkeit, Pulver, Granulat oder in kompaktierter Form oder auch auf einem Trägermaterial, wie Kieselgel oder zusammen mit einem Polymerpulver oder Wachs wie z.B. einem Polyethylenwachs, vorliegen.

Bevorzugt werden pro 100 Teile Polykondensat 0,01 bis 5 Teile Phosphonat eingesetzt.

Bevorzugt setzt man pro 100 Teile Polykondensat 0,01 bis 2,5 Teile polyfunktionelle Verbindung b) und 0,02 bis 15 Teile Polyanhydrid a) ein.

Bevorzugt beträgt das Verhältnis n-funktionelle Verbindung b) zu m-funktionellem Polyanhydrid a) zwischen 2m/n und m/(4n).

Bevorzugt wird das Verfahren so durchgeführt, dass die maximale Massentemperatur der Schmelze von 180° bis 320° C beträgt.

Die Erhitzung oberhalb des Schmelz- bzw. Glaspunktes wird im allgemeinen bis zu einer homogenen Verteilung der Mischung unter Rühren durchgeführt. Die Temperatur richtet sich dabei nach dem verwendeten Polykondensat. Bei kristallinen Polyestern arbeitet man vorzugsweise im Bereich zwischen Schmelztemperatur und einer Temperatur etwa 50°C oberhalb der Schmelztemperatur. Bei amorphen Polyestern erfolgt das Verfahren etwa im Bereich zwischen 50°C und 150°C oberhalb der jeweiligen Glasübergangstemperatur.

Bevorzugt ist das Verarbeitungsgerät ein Einschneckenextruder, Doppelschneckenextruder, Planetenwalzenextruder, Ringextruder oder Kokneter mit mindestens einer Entgasungszone, an welche ein Unterdruck angelegt ist.

Bevorzugt ist ein Verfahren, welches dadurch gekennzeichnet ist, dass ein Unterdruck von weniger als 250 mbar, besonders bevorzugt von weniger als 100 mbar und ganz besonders bevorzugt von weniger als 50 mbar an die Entgasungszone angelegt wird.

Ebenfalls bevorzugt ist ein Verfahren welches dadurch gekennzeichnet ist, dass das Verarbeitungsgerät ein dichtkämmender ineinandergreifender Doppelschneckenextruder oder Ringextruder mit gleichsinnig drehenden Schnecken und mit einer Einzugszone, einer Aufschmelzzone, mindestens einer Entgasungszone und einer Austragszone ist, wobei die Entgasungszone von der Aufschmelzzone oder von einer weiteren Entgasungszone durch einen Schmelzpfropf getrennt ist.
Diese Trennung durch einen Schmelzpfropf kann beispielsweise durch eine Kombination von einem Knet- und einem rückfördernden Schneckenelement bewirkt werden.

Bevorzugt weist das Verarbeitungsgerät 1-4 Entgasungszonen auf, besonders bevorzugt 1-3.

Ein weiterer Gegenstand der Erfindung ist die Verwendung einer Additivmischung, enthaltend
a) mindestens ein polyfunktionelles Anhydrid (Polyanhydrid);
b) mindestens eine polyfunktionelle Verbindung, deren funktionelle Gruppen mit den Anhydridgruppen der Komponente a) reagieren können, wobei die polyfunktionelle Verbindung eine polyfunktionelle Hydroxylverbindung (Polyol) ist; und
c) mindestens ein Phosphonat
zur Erhöhung des Molekulargewichtes und zur Modifizierung von Polykondensationsprodukten während der Verarbeitung in der Schmelze, wobei das Polykondensationsprodukt ein aliphatischer oder aromatischer Polyester, ein aliphatisches oder aromatisches Polyamid oder Polycarbonat oder ein Gemisch (blend) oder Copolymeres davon ist.
Besonders bevorzugt enthält die Mischung 0,05%-0,5% Pentaerythrit, 0,1-3% Pyromellitsäuredianhydrid und 0,03-1% einer Verbindung der Formel II, 111. IV, V oder VI.

Ganz besonders bevorzugt enthält die Mischung 0,09%-0,2% Pentaerythrit, 0.18-1.2% Pyromellitsäuredianhydrid und 0,05-0,5% einer Verbindung der Formel II, III, IV, V oder VI.

Weitere Gegenstände der Erfindung sind Polykondensate, herstellbar nach dem vorstehend beschriebenen Verfahren unter Zusatz von Treibmittel, sowie geschäumte Produkte, herstellbar aus dem modifiziertem Polykondensat und Artikel, hergestellt durch Extrusionsblasformen eines modifizierten Polykondensates.

Das gegenständliche Verfahren führt überraschend zu Polykondensaten, die sich besonders zum Extrusionsblasformen eignen. Es bedarf keines zusätzlichen Verarbeitungsschritts oder zusätzlicher Additive, sonder es reicht aus, wenn die erfindungsgemässe Additivmischung im Polykondensat enthalten ist.

Neben der erfindungsgemässen Additivmischung können noch weitere Zusätze im Polykondensat vorhanden sein. Beispiele hierfür sind nachstehend aufgeführt.
1. Antioxidantien
   1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methylheptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
   1.4. Tocopherole, z.B. α-Tocopherol, β-Tocopherol, γ-Tocopherol, δ-Tocopherol und Mischungen davon (Vitamin E).
   1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
   1.6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
   1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.
   1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
   1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris-(3,5-di-tert-butyl-4-hydroxybenzyl)-phenol.
   1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
   1.11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.12. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.13. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Amide der β-(3,5-Di-tert-butyl-4-hydroxyphenyl)-propionsäure, wie z.B. N,N'-Bis(3,5-di-tert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)-hydrazid, N,N'-Bis[2-(3-[3,5-di-tert-butyl-4-hydroxyphenyl]-propionyloxy)ethyl]oxamid (Naugard®XL-1 der Firma Uniroyal).
   1.17. Ascorbinsäure (Vitamin C).
   1.18. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(2-naphthyl)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin-4-ol.
2. UV-Absorber und Lichtschutzmittel
   2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 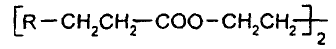 mit R = 3'-tert-Butyl-4'-hydroxy-5'-2H-benzotriazol-2-yl-phenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.
   2.2. 2-Hydroxybenzophenone, wie z. B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. - butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylammo-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-pipendyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-aminopiperidin oder 1,2,2,6,6-Pentamethyl-4-aminopiperidin.
   2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)-methylphosphit, Bis(2,4-di-tert-butyl-6-methylphenyl)-ethylphosphit, 2,2',2"-Nitrilo[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit.
   Besonders bevorzugt werden die folgenden Phosphite verwendet:
   Tris(2,4-di-tert-butylphenyl)-phosphit (Irgafos®168, Ciba-Geigy), Tris(nonylphenyl)-phosphit, 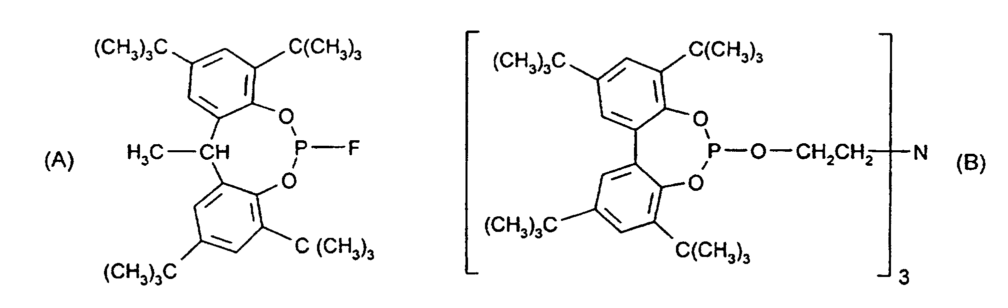 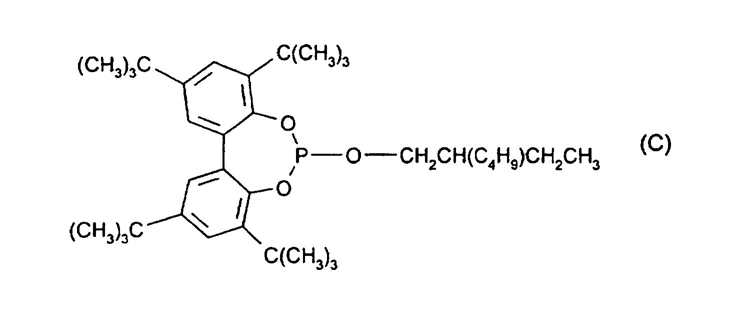 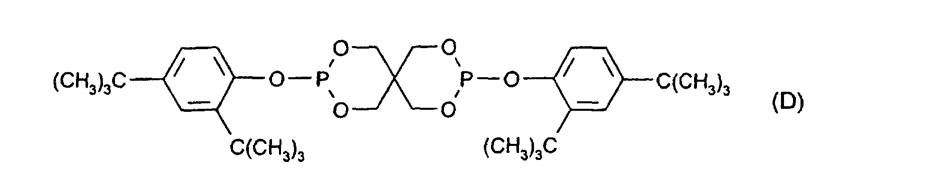 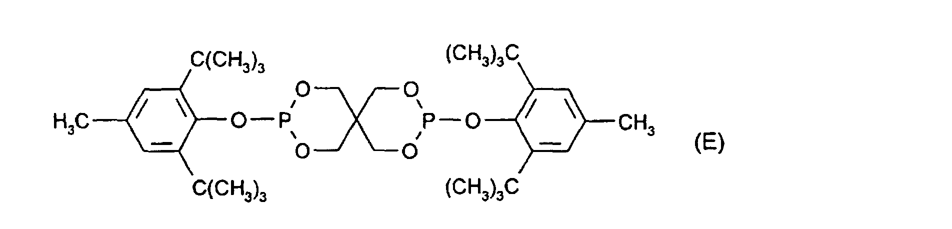 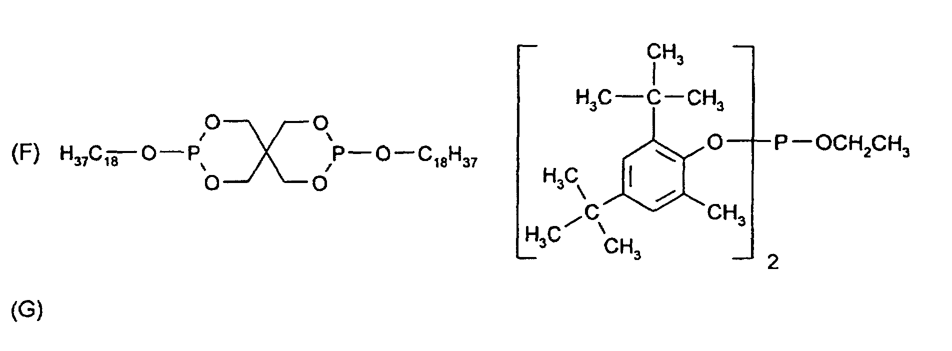
5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alphaheptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alpha-heptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-distearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
9. Polyamidstabilisatoren, wie z.B. Kupfersalze in Kombination mit Jodiden und/oder Phosphorverbindungen und Salze des zweiwertigen Mangans.
10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinkbrenzcatechinat.
11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").
12. Füllstoffe und Verstärkungsmittel, wie z.B. Calciumcarbonat, Silikate, Glasfasern, Glaskugeln, Talk, Kaolin, Glimmer, Bariumsulfat, Metalloxide und -hydroxide, Ruß, Graphit, Holzmehl und Mehle oder Fasern anderer Naturprodukte, synthetische Fasern.
13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.
14. Benzofuranone bzw. Indolinone, wie z.B. in U.S. 4,325,863; U.S. 4,338,244; U.S. 5,175,312, U.S. 5,216,052; U.S. 5,252,643; DE-A-4316611; DE-A-4316622; DE-A-4316876; EP-A-0589839 oder EP-A-0591102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)-phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on, 3-(3,4-Dimethylphenyl)-5,7-di-tert-butyl-benzofuran-2-on, 3-(2,3-Dimethylphenyl)-5,7-di-tert-butyl-benzofuran-2-on.
15. Carbodiimide
   Poly[nitrilomethanetetraylnitrilo[2,4,6-tris(1-methylethyl)-1,3-phenylene]],
   Poly[nitrilomethanetetraylnitrilo(2,4,6-triisopropyl-m-phenylene)],
   polymer with methanediimine and 1,1'-methylenebis[4-isocyanatobenzene,
   Poly(1,3,5-triisopropylbenzene-2,4-carbodiimide),
   1,3-Diphenylcarbodiimide,
   Bis(3-methylphenyl)carbodiimide,
   Carbodiimide, di-2-pyridyl,
   Bis(cyclohexyl)carbodiimide,
   Dibutylcarbodiimide,
   N,N'-Diisobutylcarbodiimide.

In einer bevorzugten Ausführungsform setzt man zusätzlich ein Carbodiimid zu.

Die nachfolgenden Beispiele erläutern die Erfindung

### Verarbeitung:

Die in Tabelle 1 angegebenen Mischungen werden hergestellt, verarbeitet und analysiert:

**Tabelle 1**

| Vergleichsbeispiele und Beispiel 1 (Gewichtsteile) | | | | |
|---|---|---|---|---|
| | Vergleichsbeispiel 1 | Vergleichsbeispiel 2 | Vergleichsbeispiel 3 | Beispiel 1 erfindungsgemäß |
| Polyclear RT43 (Hoechst Trevira) | 100 | 100 | 100 | 100 |
| Pentaerythrit | 0 | 0,1 | 0,1 | 0,1 |
| PMDA | 0 | 0 | 0,5 | 0,5 |
| Phosphonat 1 | 0 | 0,25 | 0 | 0,25 |
| Phosphonat 1: Ca-salz des 3,5-Di-tert-butyl-4-hydroxybenzyl-phosphonsäure-monoethylester | | | | |

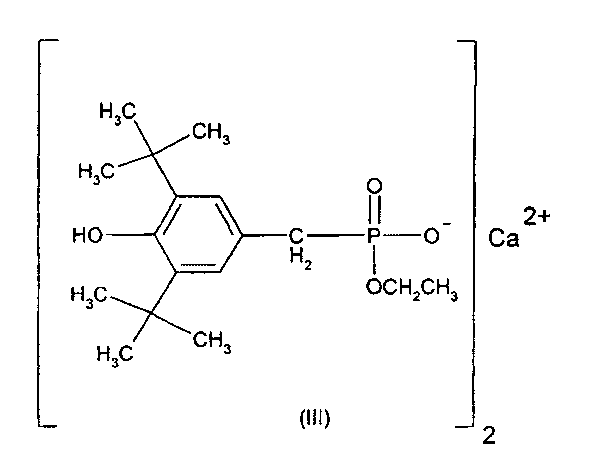

Das Ausgangsmaterial wird mindestens 8 h bei 80 °C im Vakuum vorgetrocknet. Es werden je ca. 1 kg Mischung durch physikalisches Mischen im Rotationsmischer hergestellt. Die Mischungen werden mit einem dichtkämmenden, entgegendrehenden Haake TW100 Zweischneckenextruder mit konischen Schnecken extrudiert und über eine Lochdüse in ein Wasserbad Strang-granuliert.
T-Programm: 210° C (Einzug) bis 260 °C (Düse)
Vakuum: 3 mbar an der Entgasungszone
Drehzahl: 60 UpM
Durchsatz: 30 g/min

### Messungen

Intrinsische Viskosität (I.V.): 1 g Polymer werden in 100 g einer 1:1-Mischung aus o-Dichlorbenzol und Phenol gelöst. Die Viskosität der Lösung wird bei 30 °C im Ubbelode-Viskosimeter gemessen und auf die intrinsische Viskosität umgerechnet. (analog DIN 53728)
Melt Flow Rate (MFR): Messung bei 260 °C mit 1,2 kg mittels Schmelzindexprüfgerät Göttfert MP-D (ISO 1133)
α = MFR • I.V.: Kennzahl für Scherverflüssigung.

Die Ergebnisse sind in Tabelle 2 dargestellt

**Tabelle 2**

| Beispiel | I.V. [dl/g] | MFR [g/10min] | α = MFR · I.V. [dl/10min] |
|---|---|---|---|
| Vergleichsbeispiel 1 | 0,61 | 25 | 15 |
| Vergleichsbeispiel 2 | 0,59 | 31 | 18 |
| Vergleichsbeispiel 3 | 0,57 | 17 | 10 |
| Beispiel 1 | 0,65 | 9 | 6 |
| Polyclear RT43 | 0,63 | 20 | 13 |

Im Gegensatz zu den Vergleichsbeispielen zeigt sich der molekulargewichtserhöhende Effekt der erfindungsgemäßen Mischung durch einen höheren I.V.-Wert und gleichzeitig durch einen niedrigeren MFR-Wert.

## Patentansprüche

1. Verfahren zur Erhöhung des Molekulargewichtes und/oder zur Modifizierung von Polykondensationsprodukten in der Schmelze, wobei das Polykondensationsprodukt ein aliphatischer oder aromatischer Polyester, ein aliphatisches oder aromatisches Polyamid oder Polycarbonat oder ein Gemisch (blend) oder Copolymeres davon ist, **dadurch gekennzeichnet, daß** man dem Polykondensationsprodukt ein Gemisch enthaltend
a) mindestens ein polyfunktionelles Anhydrid (Polyanhydrid);
b) mindestens eine polyfunktionelle Verbindung, deren funktionelle Gruppen mit den Anhydridgruppen der Komponente a) reagieren können, wobei die polyfunktionelle Verbindung eine polyfunktionelle Hydroxylverbindung (Polyol) ist; und
c) mindestens ein Phosphonat
zusetzt.

2. Verfahren nach Anspruch 1, **dadurch gekennzeichnet, dass** das Polykondensationsprodukt Polyethylentherephthalat (PET), Polybutylentherephthalat (PBT), Polyethylennaphthalat (PEN), ein Copolyester, PA 6, PA 6,6, Polycarbonat enthaltend über Carbonatgruppen verknüpftes Bisphenol A, Bisphenol Z oder Bisphenol F ist.

3. Verfahren nach Anspruch 1, **dadurch gekennzeichnet, dass** das Polykondensat ein Recyclat ist.

4. Verfahren nach Anspruch 1, **dadurch gekennzeichnet, dass** das Polykondensat PET oder ein Copolymeres mit PET ist.

5. Verfahren nach Anspruch 1, **dadurch gekennzeichnet, dass** das Polyanhydrid a) 2-8 Anhydridfunktionen aufweist und neben den Anhydridfunktionen noch freie Carbonsäuregruppen oder Carbonsäureester vorhanden sein können.

6. Verfahren nach Anspruch 5, **dadurch gekennzeichnet, dass** man Tetracarbonsäuredianhydride einsetzt.

7. Verfahren nach Anspruch 6, **dadurch gekennzeichnet, dass** man Pyromellitsäuredianhydrid, Benzophenontetracarbonsäuredianhydrid, 1,1,2,2-Ethantetracarbonsäuredianhydrid, 1,2,3,4-Cyclopentantetracarbonsäuredianhydrid, Diphenylsulfon-tetracarbonsäuredianhydrid, 5-(2,5-Dioxotetrahydro-3-furanyl)-3-methyl-3 cyclohexan-1,2-dicarbonsäuredianhydrid, Bis-(3,4-dicarbonsäurephenyl)-ether-dianhydrid, Bis-(3,4-Dicarbonsäurephenyl)-thioether-dianhydrid, Bisphenol-A-bisether-dianhydrid, 2,2-Bis-(3,4-Dicarbonsäurephenyl)-hexafluorpropan-dianhydrid, 2,3,6,7-Naphthalin-tetracarbonsäure-dianhydrid, Bis-(3,4-dicarbonsäurephenyl)-sulfon-dianhydrid, 1,2,5,6-Naphthalin-tetracarbonsäure-dianhydrid, 2,2',3,3'-Biphenyltetracarbonsäure-dianhydrid, Hydrochinonbisether-dianhydrid, 3,4,9,10-Perylentetracarbonsäure-dianhydrid, 1,2,3,4-Cyclobutantetracarbonsäure-dianhydrid, 3,4-Dicarboxy-1,2,3,4-tetrahydro-1-naphthalinbernsteinsäure-dianhydrid, Bicyclo(2,2)oct-7-en-2,3,5,6-tetracarbonsäure-dianhydrid, Tetrahydrofuran-2,3,4,5-tetracarbonsäure-dianhydrid, 2,2-bis(3,4-Dicarboxyphenyl)propan-dianhydrid, 3,3',4,4'-Biphenyltetracarbonsäure-dianhydrid, 4,4'-Oxydiphthalsäure-dianhydrid (ODPA), Ethylendiamin-tetracarbonsäure-dianhydrid (DDTAh), oder Kombinationen dieser Dianhydride einsetzt.

8. Verfahren nach Anspruch 1, **dadurch gekennzeichnet, dass** man ein Polyol aus Phenolen und/oder Alkoholen mit 3-10 freien Hydroxylgrupen einsetzt.

9. Verfahren nach Anspruch 8, **dadurch gekennzeichnet, dass** man als Polyol Glycerin oder Pentaerythrit einsetzt.

10. Verfahren nach Anspruch 1, **dadurch gekennzeichnet, dass** man ein Phosphonat der Formel I 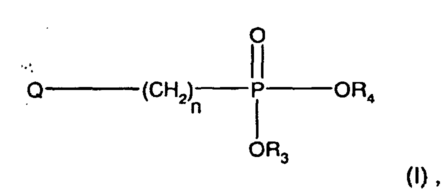 worin
R₃ H, C₁-C₂₀-Alkyl, unsubstituiertes oder durch C₁-C₄-Alkyl substituiertes Phenyl oder Naphthyl bedeutet,
R₄ Wasserstoff, C₁-C₂₀-Alkyl, unsubstituiertes oder durch C₁-C₄-Alkyl substituiertes Phenyl oder Naphthyl; oder M^{r+} / r darstellt,
M^{r+} ein r-wertiges Metallkation oder das Ammoniumion ist,
n 0, 1, 2, 3, 4, 5 oder 6 bedeutet, und
r 1, 2, 3 oder 4 darstellt;
Q Wasserstoff, -X-C(O)-OR₇, oder einen Rest 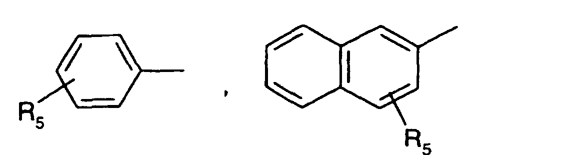 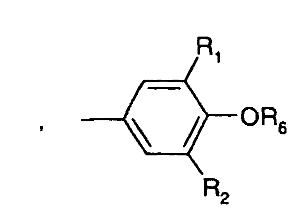 bedeutet,
R₁ iso-Propyl, tert-Butyl, Cyclohexyl oder mit 1-3 C₁-C₄-Alkylgruppen substituiertes Cyclohexyl bedeutet,
R₂ Wasserstoff, C₁-C₄-Alkyl, Cyclohexyl oder mit 1-3 C₁-C₄-Alkylgruppen substituiertes Cyclohexyl darstellt,
R₅, H, C₁-C₁₈-Alkyl, OH, Halogen oder C₃-C₇-Cycloalkyl ist;
R₆ H, Methyl, Trimethylsilyl, Benzyl, Phenyl, Sulfonyl oder C₁-C₁₈-Alkyl ist;
R₇ H, C₁-C₁₀-Alkyl oder C₃-C₇-Cycloalkyl ist;und
X Phenylen, mit C₁-C₄-Alkylgruppen substituiertes Phenylen oder Cyclohexylen bedeutet;
einsetzt.

11. Verfahren nach Anspruch 10, **dadurch gekennzeichnet, dass** man eine Verbindung der Formel Ia 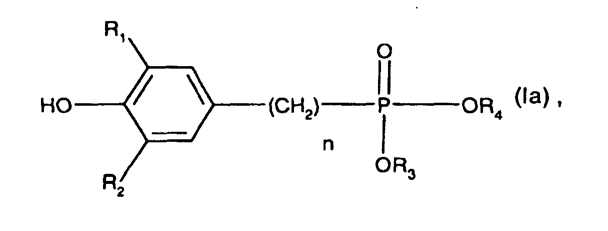 worin
R₁ H, iso-Propyl, tert-Butyl, Cyclohexyl oder mit 1-3 C₁-C₄-Alkylgruppen substituiertes Cyclohexyl bedeutet,
R₂ Wasserstoff, C₁-C₄-Alkyl, Cyclohexyl oder mit 1-3 C₁-C₄-Alkylgruppen substituiertes Cyclohexyl darstellt
R₃ C₁-C₂₀-Alkyl, unsubstituiertes oder durch C₁-C₄-Alkyl substituiertes Phenyl oder Naphthyl bedeutet,
R₄ Wasserstoff, C₁-C₂₀-Alkyl, unsubstituiertes oder durch C₁-C₄-Alkyl substituiertes Phenyl oder Naphthyl; oder M^{r+} / r darstellt,
M^{r+} ein r-wertiges Metallkation ist,
n 1, 2, 3, 4, 5 oder 6 bedeutet, und
r 1, 2, 3 oder 4 darstellt;
einsetzt.

12. Verfahren nach Anspruch 1, **dadurch gekennzeichnet, dass** man eine Verbindung der Formel II, III, IV, V oder VI einsetzt 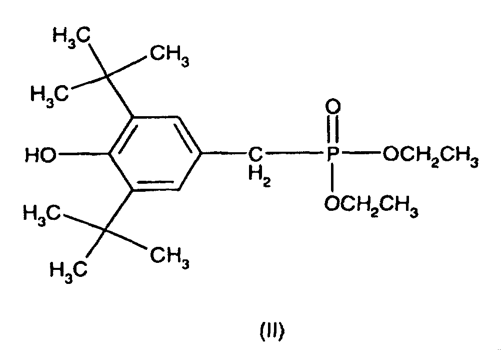 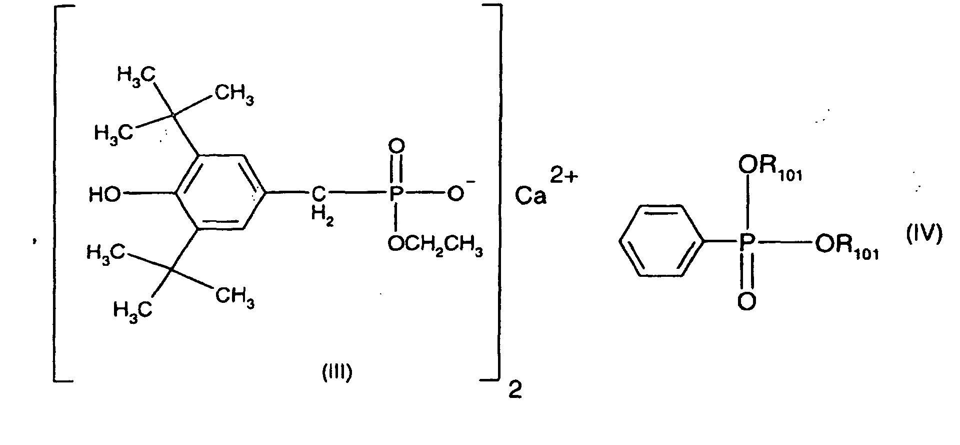 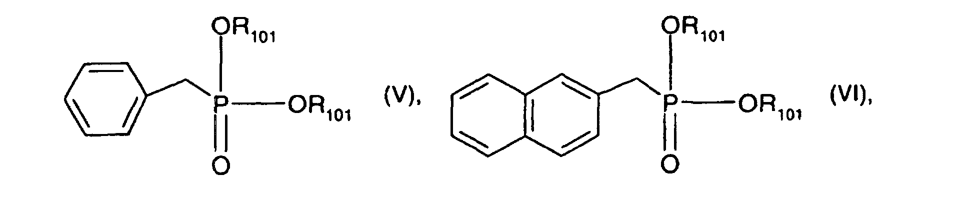 worin R₁₀₁ unabhängig voneinander Wasserstoff oder M^{r+} / r bedeutet.

13. Verfahren nach Anspruch 1, **dadurch gekennzeichnet, dass** pro 100 Teile Polykondensat 0,01 bis 5 Teile Phosphonat eingesetzt werden.

14. Verfahren nach Anspruch 1, **dadurch gekennzeichnet, dass** man pro 100 Teile Polykondensat 0,01 bis 2,5 Teile polyfunktionelle Verbindung b) und 0,02 bis 15 Teile Polyanhydrid a) einsetzt.

15. Verfahren nach Anspruch 1, **dadurch gekennzeichnet, dass** das Verhältnis n-funktionelle Verbindung b) zu m-funktionellem Polyanhydrid a) zwischen 2m/n und m/(4n) beträgt.

16. Verfahren nach Anspruch 1, **dadurch gekennzeichnet, dass** die maximale Massentemperatur der Schmelze von 180° bis 320° C beträgt.

17. Verfahren nach Anspruch 1, **dadurch gekennzeichnet, dass** man zusätzlich ein Carbodiimid einsetzt.

18. Verwendung einer Additivmischung enthaltend
a) mindestens ein polyfunktionelles Anhydrid (Polyanhydrid);
b) mindestens eine polyfunktionelle Verbindung, deren funktionelle Gruppen mit den Anhydridgruppen der Komponente a) reagieren können, wobei die polyfunktionelle Verbindung eine polyfunktionelle Hydroxylverbindung (Polyol) ist; und
c) mindestens ein Phosphonat
zur Erhöhung des Molekulargewichtes und zur Modifizierung von Polykondensationsprodukten während der Verarbeitung in der Schmelze, wobei das Polykondensationsprodukt ein aliphatischer oder aromatischer Polyester, ein aliphatisches oder aromatisches Polyamid oder Polycarbonat oder ein Gemisch (blend) oder Copolymeres davon ist.

19. Polykondensate, herstellbar nach einem Verfahren gemäss Anspruch 1.

20. Geschäumte Polykondensate, herstellbar nach Anspruch 1, indem zusätzlich Treibmittel zugesetzt wird.

21. Artikel, hergestellt durch Extrusionsblasformen eines Polykondensates nach Anspruch 19.

## Claims

1. A process for increasing the molecular weight of and/or for the modification of a polycondensate in the melt, the polycondensate being an aliphatic or aromatic polyester, an aliphatic or aromatic polyamide or polycarbonate or a blend or copolymer thereof, which comprises adding to the polycondensate a blend comprising
a) at least one polyfunctional anhydride (polyanhydride);
b) at least one polyfunctional compound, the functional groups of which are able to react with the anhydride groups of component a), the polyfunctional compound being a polyfunctional hydroxyl compound (polyol); and
c) at least one phosphonate.

2. A process according to claim 1, wherein the polycondensate is polyethylene terephthalate (PET), polybutylene terephthalate (PBT), polyethylene naphthalate (PEN), a copolyester, PA 6, PA 6,6, or a polycarbonate containing bisphenol A, bisphenol Z or bisphenol F linked via carbonate groups.

3. A process according to claim 1, wherein the polycondensate is a recyclate.

4. A process according to claim 1, wherein the polycondensate is PET or a copolymer with PET.

5. A process according to claim 1, wherein the polyanhydride a) has 2-8 anhydride functions, it being possible for free carboxylic acid groups or carboxylates to be present besides the anhydride functions.

6. A process according to claim 5, which comprises using a tetracarboxylic dianhydride.

7. A process according to claim 6, which comprises using a pyromellitic dianhydride, benzophenonetetracarboxylic dianhydride, 1,1,2,2-ethanetetracarboxylic dianhydride, 1,2,3,4-cyclopentanetetracarboxylic dianhydride, diphenylsulfonetetracarboxylic dianhydride, 5-(2,5-dioxotetrahydro-3-furanyl)-3-methyl-3-cyclohexane-1,2-dicarboxylic dianhydride, bis(3,4-dicarboxylic acid phenyl)ether dianhydride, bis(3,4-dicarboxylic acid phenyl)thioether dianhydride, bisphenol A bisether dianhydride, 2,2-bis(3,4-dicarboxylic acid phenyl)hexafluoropropane dianhydride, 2,3,6,7-naphthalenetetracarboxylic dianhydride, bis(3,4-dicarboxylic acid phenyl)sulfone dianhydride, 1,2,5,6-naphthalenetetracarboxylic dianhydride, 2,2',3,3'-biphenyltetracarboxylic dianhydride, hydroquinone bisether dianhydride, 3,4,9,10-perylenetetracarboxylic dianhydride, 1,2,3,4-cyclobutanetetracarboxylic dianhydride, 3,4-dicarboxy-1,2,3,4-tetrahydro-1-naphthalenesuccinic dianhydride, bicyclo(2,2)oct-7-ene-2,3,5,6-tetracarboxylic dianhydride, tetrahydrofuran-2,3,4,5-tetracarboxylic dianhydride, 2,2-bis(3,4-dicarboxyphenyl)propane dianhydride, 3,3',4,4'-biphenyltetracarboxylic dianhydride, 4,4'-oxydiphthalic dianhydride (ODPA), ethylenediaminetetracarboxylic dianhydride (DDTAH), or a combination of those dianhydrides.

8. A process according to claim 1, which comprises using a polyol consisting of phenols and/or alcohols containing 3-10 free hydroxyl groups.

9. A process according to claim 8, which comprises using glycerol or pentaerythritol as polyol.

10. A process according to claim 1, which comprises using a phosphonate of formula I 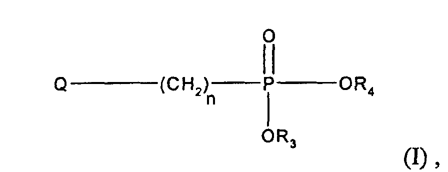 wherein
R₃ is H, C₁-C₂₀alkyl, or unsubstituted or C₁-C₄alkyl-substituted phenyl or naphthyl,
R₄ is hydrogen, C₁-C₂₀alkyl, or unsubstituted or C₁-C₄alkyl-substituted phenyl or naphthyl; or
M^{r+} / r,
M^{r+} is an r-valent metal cation or the ammonium ion,
n is 0, 1, 2, 3, 4, 5 or 6, and
r is 1, 2, 3 or 4;
Q is hydrogen, -X-C(O)-OR₇, or a radical 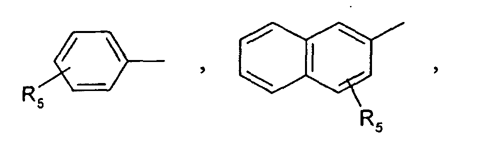 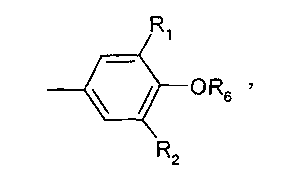 R₁ is isopropyl, tert-butyl, cyclohexyl, or cyclohexyl which is substituted by 1-3 C₁-C₄alkyl groups,
R₂ is hydrogen, C₁-C₄alkyl, cyclohexyl, or cyclohexyl which is substituted by 1-3 C₁-C₄alkyl groups,
R₅ is H, C₁-C₁₈alkyl, OH, halogen or C₃-C₇cycloalkyl;
R₆ is H, methyl, trimethylsilyl, benzyl, phenyl, sulfonyl or C₁-C₁₈alkyl;
R₇ is H, C₁-C₁₀alkyl or C₃-C₇cycloalkyl; and
X is phenylene, C₁-C₄alkyl group-substituted phenylene or cyclohexylene.

11. A process according to claim 10, which comprises using a compound of formula Ia 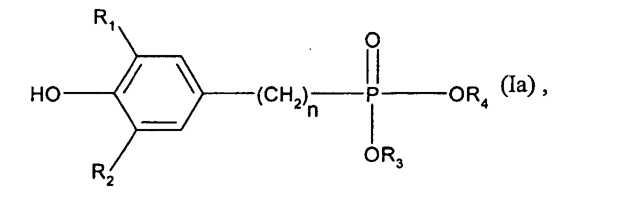 wherein
R₁ is H, isopropyl, tert-butyl, cyclohexyl, or cyclohexyl which is substituted by 1-3 C₁-C₄alkyl groups,
R₂ is hydrogen, C₁-C₄alkyl, cyclohexyl, or cyclohexyl which is substituted by 1-3 C₁-C₄alkyl groups,
R₃ is C₁-C₂₀alkyl, or unsubstituted or C₁-C₄alkyl-substituted phenyl or naphthyl,
R₄ is hydrogen, C₁-C₂₀alkyl, or unsubstituted or C₁-C₄alkyl-substituted phenyl or naphthyl; or
M^{r+} / r,
M^{r+} is an r-valent metal cation,
n is 1, 2, 3, 4, 5 or 6, and
r is 1, 2, 3 or 4.

12. A process according to claim 1, which comprises using a compound of formula II, III, IV, V or VI 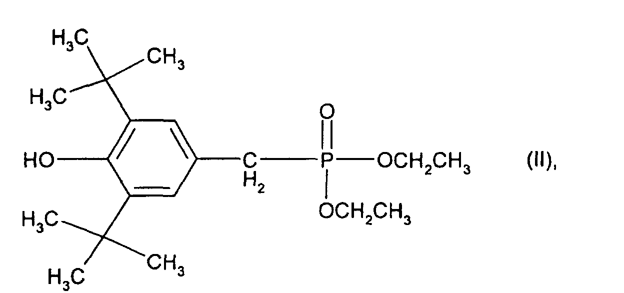 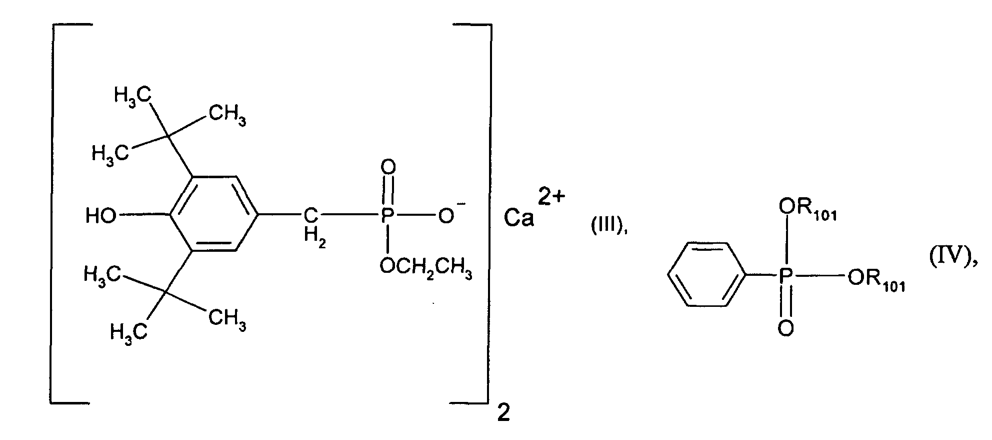 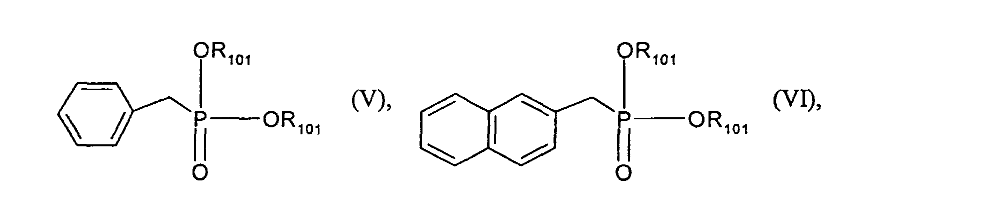 wherein the R₁₀₁ are each independently of one another hydrogen or M^{r+} / r.

13. A process according to claim 1, which comprises using 0.01 to 5 parts of phosphonate per 100 parts of polycondensate.

14. A process according to claim 1, which comprises using 0.01 to 2.5 parts of the polyfunctional compound b) and 0.02 to 15 parts of the polyanhydride a) per 100 parts of polycondensate.

15. A process according to claim 1, wherein the ratio of n-functional compound b) to m-functional polyanhydride a) is from 2m/n to m/(4n).

16. A process according to claim 1, wherein the maximum mass temperature of the melt is from 180° to 320°C.

17. A process according to claim 1, which comprises additionally using a carbodiimide.

18. Use of an additive blend which comprises
a) at least one polyfunctional anhydride (polyanhydride);
b) at least one polyfunctional compound, the functional groups of which are able to react with the anhydride groups of component a), the polyfunctional compound being a polyfunctional hydroxyl compound (polyol); and
c) at least one phosphonate
for increasing the molecular weight of and for the modification of a polycondensate during processing in the melt, the polycondensate being an aliphatic or aromatic polyester, an aliphatic or aromatic polyamide or polycarbonate or a blend or copolymer thereof.

19. A polycondensate which can be prepared by a process according to claim 1.

20. A foamed polycondensate which can be prepared according to claim 1 by additionally adding a blowing agent.

21. An article prepared by extrusion blow-moulding a polycondensate according to claim 19.

## Revendications

1. Procédé pour augmenter la masse moléculaire et/ou modifier des produits de polycondensation à l'état fondu, le produit de polycondensation étant un polyester aliphatique ou aromatique, un polyamide ou un polycarbonate aliphatique ou aromatique, ou un mélange (blend) ou un copolymère de ceux-ci, **caractérisé en ce qu'**on ajoute au produit de polycondensation un mélange contenant
a) au moins un anhydride polyfonctionnel (polyanhydride) ;
b) au moins un composé polyfonctionnel dont les groupes fonctionnels peuvent réagir avec les groupes anhydride du composant a), le composé polyfonctionnel étant un composé hydroxylé polyfonctionnel (polyol) ; et
c) au moins un phosphonate.

2. Procédé selon la revendication 1, **caractérisé en ce que** le produit de polycondensation est le poly(téréphtalate d'éthylène)(PET), le poly(téréphtalate de butylène)(PBT), le poly(naphtalate d'éthylène)(PEN), un copolyester, le PA 6, le PA 6,6, un polycarbonate contenant du bisphénol A, du bisphénol Z ou du bisphénol F liés par l'intermédiaire de groupes carbonate.

3. Procédé selon la revendication 1, **caractérisé en ce que** le produit de condensation est un produit de recyclage.

4. Procédé selon la revendication 1, **caractérisé en ce que** le produit de condensation est le PET ou un copolymère avec le PET.

5. Procédé selon la revendication 1, **caractérisé en ce que** le polyanhydride a) comprend 2 à 8 fonctions anhydrides, et **en ce que**, outre les fonctions anhydrides, il peut encore y avoir présents des groupes acide carboxylique libres ou des esters d'acides carboxyliques.

6. Procédé selon la revendication 5, **caractérisé en ce qu'**on utilise de dianhydrides tétracarboxyliques.

7. Procédé selon la revendication 6, **caractérisé en ce qu'**on utilise le dianhydride pyromellitique, le dianhydride benzophénonetétracarboxylique, le dianhydride 1,1,2,2-éthanetétracarboxylique, le dianhydride 1,2,3,4-cyclopentanetétracarboxylique, le dianhydride diphénylsulfonetétracarboxylique, le dianhydride 5-(2,5-dioxotétrahydro-3-furannyl)-3-méthyl-3-cyclohexane-1,2-dicarboxylique, le dianhydride du bis(3,4-dicarboxophényl)-éther, le dianhydride du bis(3,4-dicarboxophényl)-thioéther, le dianhydride du biséther du bisphénol A, le dianhydride du 2,2-bis(3,4-dicarboxophényl)-hexafluoropropane, le dianhydride 2,3,6,7-naphtalènetétracarboxylique, le dianhydride de la bis(3,4-dicarboxophényl)-sulfone, le dianhydride 1,2,5,6-naphtalènetétracarboxylique, le dianhydride 2,2',3,3'-biphényletétracarboxylique, le dianhydride du biséther de l'hydroquinone, le dianhydride de l'acide 3,4,9,10-pérylènetétracarboxylique, le dianhydride 1,2,3,4-cyclobutanetétracarboxylique, le dianhydride 3,4-dicarboxy-1,2,3,4-tétrahydro-1-naphtalènesuccinique, le dianhydride bicyclo(2,2)oct-7-ène-2,3,5,6-tétracarboxylique, le dianhydride tétrahydrofuranne-2,3,4,5-tétracarboxylique, le dianhydride du 2,2-bis(3,4-dicarboxyphényl)propane, le dianhydride 3,3',4,4'-biphényletétracarboxylique, le dianhydride 4,4'-oxydiphtalique (ODPA), le dianhydride éthylènediaminetétracarboxylique (DDTAh) ou les combinaisons de ces dianhydrides.

8. Procédé selon la revendication 1, **caractérisé en ce qu'**on utilise un polyol obtenu à partir de phénols et/ou d'alcools ayant de 3 à 10 groupes hydroxyle libres.

9. Procédé selon la revendication 8, **caractérisé en ce qu'**on utilise en tant que polyol du glycérol ou du pentaérythritol.

10. Procédé selon la revendication 1, **caractérisé en ce qu'**on utilise un phosphonate de Formule I 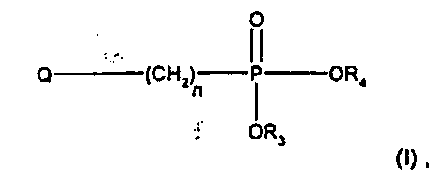 dans laquelle
R₃ est H ou un groupe alkyle en C₁ à C₂₀, phényle ou naphtyle non substitué ou substitué par un alkyle en C₁ à C₄,
R₄ est un atome d'hydrogène ou un groupe alkyle en C₁ à C₂₀, un groupe phényle ou naphtyle non substitué ou substitué par un alkyle en C₁ à C₄ ; ou encore représente M^{r+} /r,
M^{r+} est un cation métallique r-valent ou l'ion ammonium,
n vaut 0, 1, 2, 3, 4, 5 ou 6, et
r vaut 1, 2, 3 ou 4 ;
Q est un atome d'hydrogène, -X-C(O)-OR₇, ou un radical 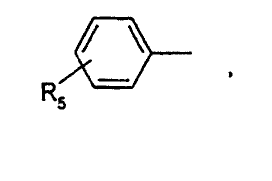 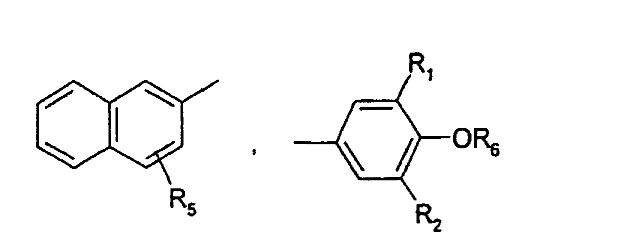
R₁ est le radical isopropyle, tert-butyle, cyclohexyle, ou cyclohexyle substitué par 1 à 3 groupes alkyle en C₁ à C₄,
R₂ est un atome d'hydrogène ou un groupe alkyle en C₁ à C₄, cyclohexyle, ou cyclohexyle substitué par 1 à 3 groupes alkyle en C₁ à C₄,
R₅ est H ou un groupe alkyle en C₁ à C₁₈, OH, halogéno ou cycloalkyle en C₃ à C₇ ;
R₆ est H ou le groupe méthyle, triméthylsilyle, benzyle, phényle, sulfonyle ou alkyle en C₁ à C₁₈ ;
R₇ est H ou un groupe alkyle en C₁ à C₁₀ ou cycloalkyle en C₃ à C₇, et
X est le phénylène, un phénylène ou un cyclohexylène substitué par des groupes alkyle en C₁ à C₄.

11. Procédé selon la revendication 10, **caractérisé en ce qu'**on utilise un composé de Formule Ia 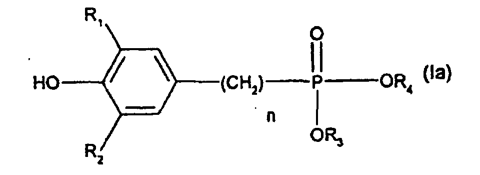 dans laquelle
R₁ est H ou un groupe isopropyle, tert-butyle, cyclohexyle, ou cyclohexyle substitué par 1 à 3 groupes alkyle en C₁ à C₄,
R₂ est un atome d'hydrogène ou un groupe alkyle en C₁ à C₄, cyclohexyle, ou cyclohexyle substitué par 1 à 3 groupes alkyle en C₁ à C₄,
R₃ est un groupe alkyle en C₁ à C₂₀, phényle ou naphtyle non substitué ou substitué par un alkyle en C₁ à C₄,
R₄ est un atome d'hydrogène ou un groupe alkyle en C₁ à C₂₀, phényle ou naphtyle non substitué ou substitué par un alkyle en C₁ à C₄ ; ou M^{r+}/r,
M^{r+} est un cation métallique r-valent,
n vaut 1, 2, 3, 4, 5 ou 6, et
r vaut 1, 2, 3 ou 4.

12. Procédé selon la revendication 1, **caractérisé en ce qu'**on utilise un composé de Formule II, III, IV, V ou VI 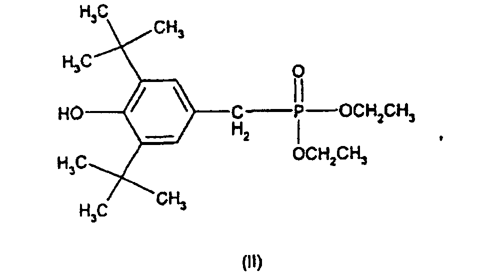 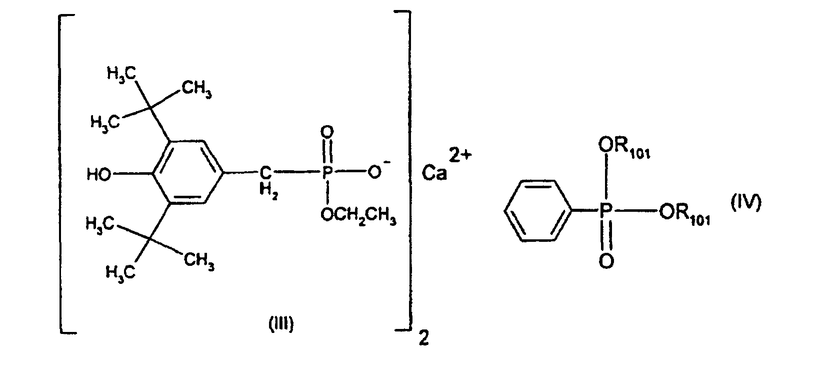 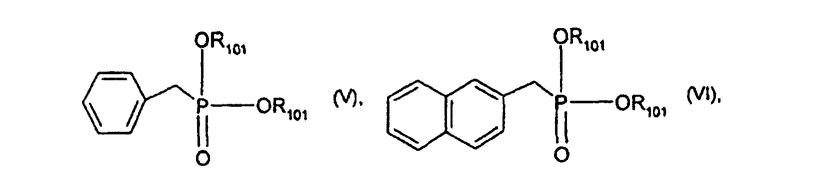 où les radicaux R₁₀₁ représentent chacun indépendamment des autres un atome d'hydrogène ou M^{r+}/r.

13. Procédé selon la revendication 1, **caractérisé en ce qu'**on utilise pour 100 parties de produit de polycondensation 0,01 à 5 parties de phosphonate.

14. Procédé selon la revendication 1, **caractérisé en ce qu'**on utilise pour 100 parties de produit de polycondensation 0,01 à 2,5 parties du composé polyfonctionnel b) et 0,02 à 15 parties du polyanhydride a).

15. Procédé selon la revendication 1, **caractérisé en ce que** le rapport du composé n-fonctionnel b) au polyanhydride m-fonctionnel a) est compris entre 2m/n et m/(4n).

16. Procédé selon la revendication 1, **caractérisé en ce** la température maximale de la masse fondue est de 180 à 320°C.

17. Procédé selon la revendication 1, **caractérisé en ce qu'**on utilise en outre un carbodiimide.

18. Utilisation d'un mélange d'additifs contenant :
a) au moins un anhydride polyfonctionnel (polyanhydride) ;
b) au moins un composé polyfonctionnel dont les groupes fonctionnels peuvent réagir avec les groupes anhydrides du composant a), le composé polyfonctionnel étant un composé hydroxylé polyfonctionnel (polyol) ; et
c) au moins un phosphonate,
pour augmenter la masse moléculaire et pour modifier des produits de polycondensation pendant la mise en oeuvre à l'état fondu, le produit de polycondensation étant un polyester aliphatique ou aromatique, un polyamide ou un polycarbonate aliphatique ou aromatique ou un mélange (blend) ou un copolymère de ceux-ci.

19. Produits de polycondensation pouvant être préparés par un procédé selon la revendication 1.

20. Produits de polycondensation expansés pouvant être préparés selon la revendication 1 par addition d'un agent porogène additionnel.

21. Objets fabriqués par façonnage par extrusion-soufflage d'un produit de polycondensation selon la revendication 19.
